# EUROPEAN PATENT SPECIFICATION

(11) **EP 3 573 353 B1**
(45) Date of publication and mention of the grant of the patent: **06.04.2022**
(21) Application number: 18818515.1
(22) Date of filing: 15.06.2018
(51) Int. Cl.: H04W 4/06, H04W 48/14, H04W 48/10

(54) **COMMUNICATION METHOD AND DEVICE**
KOMMUNIKATIONSVERFAHREN UND -VORRICHTUNG
PROCÉDÉ ET DISPOSITIF DE COMMUNICATION

(30) Priority: 16.06.2017 CN 201710458756; 11.08.2017 CN 201710687843
(43) Date of publication of application: 27.11.2019
(73) Proprietor: Huawei Technologies Co., Ltd., Longgang District Shenzhen, Guangdong 518129 (CN)
(72) Inventor: GENG, Tingting, Shenzhen, Guangdong 518129 (CN); ZHANG, Hongping, Shenzhen, Guangdong 518129 (CN); ZENG, Qinghai, Shenzhen, Guangdong 518129 (CN); LIU, Yalin, Shenzhen, Guangdong 518129 (CN); GUO, Yi, Shenzhen, Guangdong 518129 (CN)
(74) Representative: Epping - Hermann - Fischer
(86) International application number: PCT/CN2018/091651
(87) International publication number: WO 2018/228562

(56) References cited:
- EP-A1- 3 471 463
- CN-A- 103 460 761
- LG ELECTRONICS INC: "Functions of the F1 interface", 3GPP DRAFT; R3-171548 FUNCTIONS OF THE F1 INTERFACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Hangzhou, China; 20170515 - 20170519 14 May 2017 (2017-05-14), XP051276335, Retrieved from the Internet: URL:http://www.3gpp.org/ftp/Meetings_3GPP_ SYNC/RAN3/Docs/ [retrieved on 2017-05-14]
- CATT: "Procedures of on demand SI delivery and error handling", 3GPP DRAFT; R2-1704236 PROCEDURES OF ON DEMAND SI DELIVERY AND ERROR HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Hangzhou, China; 20170515 - 20170519 14 May 2017 (2017-05-14), XP051274814, Retrieved from the Internet: URL:http://www.3gpp.org/ftp/Meetings_3GPP_ SYNC/RAN2/Docs/ [retrieved on 2017-05-14]
- 3GPP: "3rd Generation Partnership Project; Technical Specification Group Radio Access Network; NR; NR and NG-RAN Overall Description; Stage 2 (Release 15)", 3GPP TS 38.300 V0.4.1, 1 June 2017 (2017-06-01), pages 1-55, XP055567688,
- NTT DOCOMO; INC: "CU-DU Interface: Overall Categorization of C-plane and U-plane", TSG-RAN Working Group 3 meeting #95 R3-170618, 17 February 2017 (2017-02-17), page 3, XP051213198,
- HUAWEI: "Considerations on the Control Plane Functions Located in DU", 3GPP TSG-RAN3 Meeting#95bis R3-171220, 7 April 2017 (2017-04-07), XP051245930,
- CATT: "System Information in NR", 3GPP TSG RAN WG2 Meeting #94 R2-163470, 27 May 2016 (2016-05-27), XP051104969,

## Description

### TECHNICAL FIELD

This application relates to the field of mobile communications technologies, and in particular, to a communication method and apparatus for transmission of system information that are applied to a radio access network in which comprises a central unit and a distributed unit.

### BACKGROUND

Currently, in a distributed radio access network, to reduce deployment costs of an access network device, a CU-DU architecture is introduced, where a radio access network side of the distributed radio access network is divided into a central unit (central unit, CU) and a distributed unit (Distributed Unit, DU). In an example of protocol stack division, radio resource control (Radio Resource Control, RRC) and packet data convergence protocol (Packet Data Convergence Protocol, PDCP) layers are distributed on the CU, and radio link layer control (Radio Link Control, RLC) protocol layer and medium access control (Medium Access Control, MAC) protocol layer are distributed on the DU. Certainly, for the CU and the DU, other protocol stack division manners are also available. For example, depending on a network configuration, when the CU and the DU are deployed, RRC layer may be distributed on the CU, and PDCP, RLC, and MAC protocol layers are distributed on the DU.

Currently, no solution is provided with respect to how to broadcast system information and how to perform interaction between the CU and the DU based on the CU-DU architecture.

Document R3-171548 mainly relates to a discussion of system information management and transfer of RRC message functions over the F1 interface, in which provides: Proposal 1: The RRC message should be transferred over F1-U; Proposal 2: The RRC message should be carried through the bearer for transmission of signalling; Proposal 3: The SI to be broadcasted and the necessary information for broadcasting the SI should be provided from the CU to the DU; and Proposal 4: It is proposed to agree the TP [2] for TS 38.401.

Document R2-1704236 mainly relates to procedures of on demand SI delivery and error handling. Document 3GPP TS 38.300 V0.4.0 (2017-06) mainly relates to an overview and overall description of the NG-RAN and focuses on the radio interface protocol architecture of NR connected to 5GC.

### SUMMARY

The present invention is defined by the independent claims and by the additional features presented in the dependent claims. In the following, parts of the description and drawing referring to embodiments, which are not covered by the claims are not presented as embodiments of the invention, but as examples useful for understanding the invention.

### DESCRIPTION OF DRAWINGS

FIG. 1 is a schematic diagram of a possible network architecture according to this application;
FIG. 2 is a schematic diagram of an apparatus according to this application;
FIG. 3a is a schematic diagram of a system information window according to this application;
FIG. 3b is a schematic diagram of another system information window according to this application;
FIG. 3c is a schematic diagram of another system information window according to this application;
FIG. 3d is a schematic diagram of another system information window according to this application;
FIG. 4 is a schematic diagram of a communication method according to this application;
FIG. 5 is a schematic diagram of another communication method according to this application;
FIG. 6 is a schematic diagram of another possible network architecture according to this application;
FIG. 7 is a schematic diagram of another communication method according to this application;
FIG. 8 is a schematic diagram of another communication method according to this application;
FIG. 9 is a schematic diagram of another communication method according to this application;
FIG. 10 is a schematic diagram of another communication method according to this application;
FIG. 11 is a schematic diagram of another apparatus according to this application;
FIG. 12(a) to FIG. 12(h) are schematic diagrams of communication methods according to this application;
FIG. 13 is a schematic structural diagram of a DU according to this application; and
FIG. 14 is a schematic structural diagram of a CU according to this application.

### DESCRIPTION OF EMBODIMENTS

In a wireless communications system, an access network device notifies, via system information (system information, SI), a terminal of various types of information about the system, for example, network information of a cell in which the terminal is located, information about a registration area, information about a common channel, and information about another cell. In NR, based on a manner of sending the system information by the access network device, the system information may be classified into two types. One type is necessary system information sent by broadcast periodically, for example, minimum SI, where the minimum SI includes cell selection and initial access information. The other type is other system information (other SI) sent based on a request of the terminal, for example, other system information such as system information about cell reselection, and system information about a multimedia broadcast multicast function (multimedia broadcast multicast service, MBMS).

For the other SI, to obtain the other SI, the terminal may send a request message to the access network device. Currently, sending the other SI, for example, a system information block, to the terminal based on the request message from the terminal by the access network device is: jointly encoding all system information blocks having a same scheduling period, and then sending the system information blocks by broadcast. A main problem existing in the method is that, because the terminal needs to decode all the system information blocks, a failure rate of decoding is increased and power consumption is increased.

The following describes technical solutions of this application with reference to accompanying drawings in this application. A specific operation method in method embodiments may also be applied to an apparatus embodiment or a system embodiment.

Architectures and service scenarios described in this application intend to describe the technical solutions in this application more clearly, but are not intended to limit the technical solutions provided in this application. A person of ordinary skill in the art may know that as the network architectures evolve and a new service scenario emerges, the technical solutions provided in this application further apply to a similar technical problem.

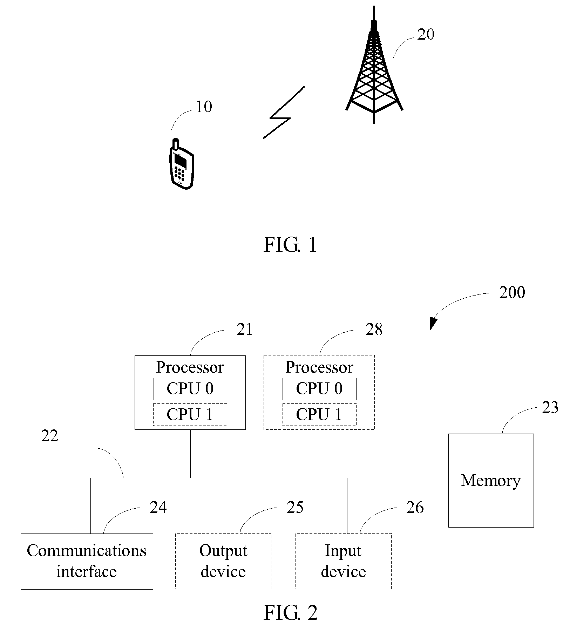

FIG. 1 is a schematic diagram of a possible network architecture according to this application. The network architecture includes at least one terminal 10 communicating with an access network device 20 via a radio interface. For clarity, only one access network device and one terminal are shown in the figure.

A terminal may also be understood as user equipment (user equipment, UE). It is a device that provides voice connectivity and/or data connectivity for a user, for example, a handheld device, an in-vehicle device, a wearable device, a computing device, or a control device that has a wireless connection function or a wireless communication function, or another processing device connected to a wireless modem, and mobile stations (mobile station, MS) in various forms, or the like. A common terminal includes a mobile phone (phone), a tablet computer (pad), a notebook computer (notebook), a palmtop computer, or a wearable device such as a smartwatch, a smart band, or a pedometer.

The access network device is a device that enables the terminal to access a wireless network, and includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), a base station (g NodeB, gNB), a transmission point (transmitting and receiving point, TRP), a transmitting point (transmitting point, TP), a mobile switching center, a Wi-Fi access point (access point, AP), or the like, or may be a central unit (central unit, CU) and a distributed unit (distributed unit, DU) in a CU-DU architecture.

FIG. 2 is a schematic diagram of an apparatus according to this application. An apparatus 200 may include at least one processor 21, a communications bus 22, a memory 23, and at least one communications interface 24.

The processor 21 may be a general-purpose central processing unit (CPU), a microprocessor, an application-specific integrated circuit (application-specific integrated circuit, ASIC), or one or more integrated circuits for controlling program execution in the solution of the present invention.

The communications bus 22 may include a path for transmitting information between the foregoing components. The communications interface 24 is implemented by a type of apparatus such as a transceiver, and is configured to communicate with another device or a communications network, for example, an Ethernet, a radio access network (RAN), or a wireless local area network (Wireless Local Area Network, WLAN).

The memory 23 may be a read-only memory (Read-Only Memory, ROM), another type of static storage device that can store static information and instructions, a random access memory (Random Access Memory, RAM), or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact optical disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. This does not constitute a limitation herein. The memory may exist independently and is connected to the processor via the bus. The memory may also be integrated with the processor. The memory 23 is configured to store application program code used to execute the solution of the present invention, where the application program code is executed under control of the processor 21. The processor 21 is configured to execute the application program code stored in the memory 23.

In a specific implementation, in an embodiment, the processor 21 may include one or more CPUs, for example, a CPU 0 and a CPU 1 in FIG. 2.

In a specific implementation, in an embodiment, the apparatus 200 may include a plurality of processors, for example, the processor 21 and a processor 28 in FIG. 2. Each of these processors may be a single-core processor, or may be a multi-core processor. The processor herein may be one or more devices, circuits, and/or processing cores used to process data (such as a computer program instruction).

In this application, the apparatus shown in FIG. 2 may be an implementation of the terminal in the system architecture shown in FIG. 1, or may be a chip in the terminal in the system architecture shown in FIG. 1. The apparatus may be configured to perform the communication method in this application.

When the apparatus shown in FIG. 2 is a terminal, in a specific implementation, in an embodiment, the apparatus 200 may further include an output device 25 and an input device 26. The output device 25 communicates with the processor 21, and may display information in a plurality of manners. For example, the output device 25 may be a liquid crystal display (liquid crystal display, LCD), a light emitting diode (light emitting diode, LED) display device, a cathode ray tube (cathode ray tube, CRT) display device, or a projector (projector). The input device 26 communicates with the processor 21, and may receive an input of a user in a plurality of manners. For example, the input device 26 may be a mouse, a keyboard, a touchscreen device, or a sensing device. The apparatus 200 may be a general-purpose apparatus or a dedicated apparatus. In a specific implementation, the apparatus 200 may be a desktop computer, a portable computer, a network server, a palmtop computer (personal digital assistant, PDA), a mobile phone, a tablet computer, a wireless terminal device, a communications device, an embedded device, or a device with a structure similar to that in FIG. 2. A type of the apparatus 200 is not limited in this application.

For example, the terminal in FIG. 1 may be the apparatus shown in FIG. 2, and a memory of the terminal stores one or more software modules. The terminal may implement the software module by using a processor and program code in the memory, to implement the communication method in this application.

In this application, the apparatus shown in FIG. 2 may also be an implementation of the access network device in the system architecture shown in FIG. 1, or may be a chip in the access network device in the system architecture shown in FIG. 1. The apparatus may be configured to perform the communication method in this application.

For example, the access network device in FIG. 1 may be the apparatus shown in FIG. 2, and a memory of the access network device stores one or more software modules. The access network device may implement the software module by using a processor and program code in the memory, to implement the communication method in this application.

System information blocks (system information block, SIB) include a plurality of types, for example, include a SIB1, a SIB2, a SIB3, ..., a SIB12, and other SIBs. A SIB that may be scheduled based on a request of a terminal, for example, the SIB3, ..., or the SIB12, may be sent by the access network device to the terminal based on the request of the terminal. For example, the access network device shown in FIG. 1 may send the system information block to the terminal.

The SIB is used as an example for description in all embodiments of the present invention, but the embodiments are not limited to the SIB. System information (system information, SI) may also be used as an example in all the embodiments of the present invention, where one piece of SI may include one or more SIBs having a same scheduling period.

The SIB has a scheduling period. Different SIBs may have a same scheduling period, or may have different scheduling periods. For example, the SIB3, the SIB4, and the SIB5 have a same scheduling period of 160 milliseconds (ms). For another example, the SIB6, the SIB7, and the SIB8 have a same scheduling period of 320 ms.

In a possible design, the SIB may be associated with a system information window (system information window, SI window), and one system information window includes one or more time intervals.

In an example, the time interval may be a transmission time interval (transmission time interval, TTI), or may be another duration parameter. A SIB can be sent in one or more time intervals in a system information window. In this application, a relationship between the SIB and the system information window is implemented in at least the following manners:
Manner 1: Scheduling periods of SIBs in a system information window are all the same.

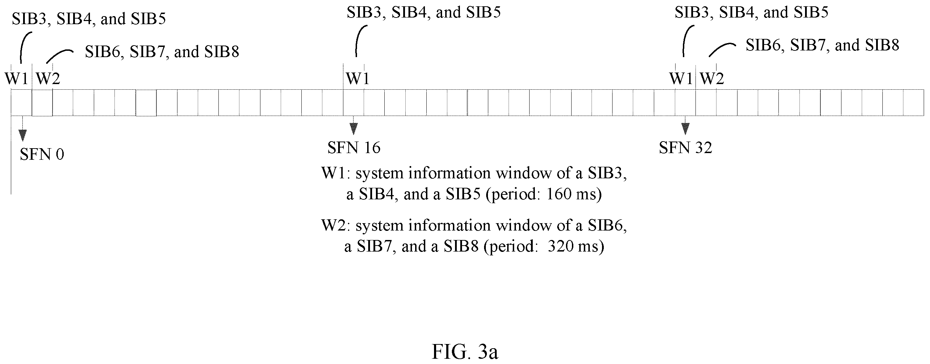

FIG. 3a is a schematic diagram of a possible system information window. For example, the SIB3, the SIB4, and the SIB5 have a same scheduling period of 160 ms, and are all sent in a system information window W1. It may also be understood that, the SIB3, the SIB4, and the SIB5 are associated with the system information window W1. The SIB6, the SIB7, and the SIB8 have a same scheduling period of 320 ms, and are all sent in a system information window W2. It may also be understood that, the SIB6, the SIB7, and the SIB8 are associated with the system information window W2. Different system information windows have a same length, that is, occupy a same duration.

For example, for the system information window W1, the system information window W1 includes one or more time intervals. In scheduling of the system information window W1, all or a part of the SIB6, the SIB7, and the SIB8 can be sent in a time interval of the system information window W1, for example, can be sent in the first time interval of W1, or can be sent in the last time interval of W1, or can be sent in the middle time interval of W1, or can be sent in a plurality of time intervals of W1.

Because there is a least common multiple for SIBs having different scheduling periods, system information windows corresponding to the SIBs having different scheduling periods may have a problem of time domain overlapping. In this application, a time of time domain overlapping is a time that is an integer multiple of the least common multiple of different scheduling periods. For example, if scheduling periods of the SIB3, the SIB4, and the SIB5 are 160 ms, and scheduling periods of the SIB6, the SIB7, and the SIB8 are 320 ms, a least common multiple of the scheduling periods is 320. Therefore, a time of time domain overlapping is a time that is an integer multiple of 320 ms, for example, 0 ms, 320 ms, 640 ms, .... In view of the problem, a possible implementation is shown in FIG. 3a, in which system information windows having time domain overlapping are separated in time domain. Optionally, the system information windows having time domain overlapping may be separated in time domain based on a sequence of system information blocks having different scheduling periods in scheduling information. For example, if the SIB3, the SIB4, and the SIB5 correspond to system information SI 1 in the scheduling information, and the SIB6, the SIB7, and the SIB8 correspond to system information SI 2 in the scheduling information, the system information window W2 is arranged after a location of the system information window W1. The system information window W1 and the system information window W2 are immediately adjacent without a gap, and do not overlap each other. To be specific, first, the SIBs in the system information window W1 are scheduled, and then the SIBs in the system information window W2 are scheduled.

Manner 2: Scheduling periods of SIBs in a system information window are different. Scheduling periods of SIBs in a system information window are different. For example, scheduling periods of all SIBs in the system information window are different, that is, scheduling periods of any two SIBs are different, or scheduling periods of some SIBs are the same, but scheduling periods of some SIBs are different.

Referring to FIG. 3a, for example, if a duration of a system information window is 60 ms, and scheduling periods of the SIB3, the SIB4, and the SIB5 are 160 ms, and scheduling periods of the SIB6, the SIB7, and the SIB8 are 320 ms, from a time of time domain overlapping, the system information window W1 occupies 0-60 ms, and the system information window W2 occupies 61-120 ms. To be specific, the system information block SIB3, SIB4, and SIB5 are sent to the terminal within 0-60 ms from a start position, and the system information block SIB6, SIB7, and SIB8 are sent to the terminal within 61-120 ms from the start position. If a latency threshold for a transmission latency of the system information is 150 ms, that is, a transmission latency condition is that the access network device needs to send the system information within 150 ms, the system information block SIB3, SIB4, SIB5, SIB6, SIB7, and SIB8 all satisfy the transmission latency condition. In this case, the SIB3, the SIB4, and the SIB5 are still sent in W1, and the SIB6, the SIB7, and the SIB8 are sent in W2. It may be understood that, the latency threshold may be sent by the access network device to the terminal, or may be predefined by a protocol. Optionally, the access network device may indicate whether each SIB needs to satisfy the transmission latency condition.

In another feasible solution, the access network device may directly indicate whether SIBs having different scheduling periods need to be sent in a same SI window at a time of time domain overlapping, or indicate whether SI having different scheduling periods needs to be sent in a same SI window at a time of time domain overlapping. It may be understood that, the access network device may further indicate, after different SI is sent in a same SI window, whether the SI window corresponding to the SI needs to be reserved. Alternatively, whether the SI window corresponding to the SI needs to be reserved after the SI is sent in another SI window may be predefined by a protocol.

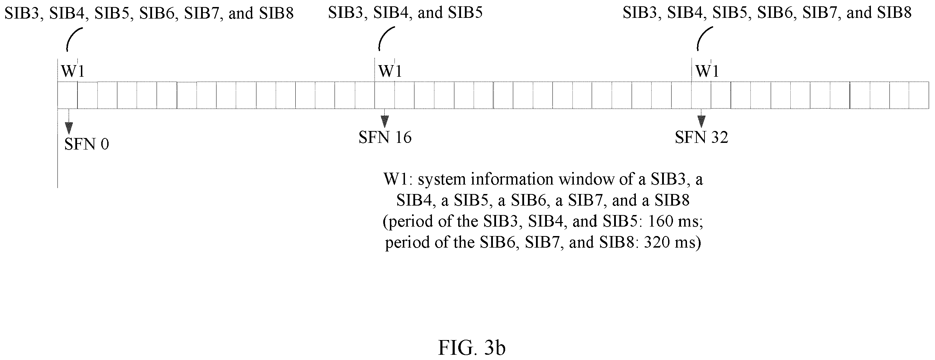

In another case, using the foregoing example as an example, if a latency threshold for a transmission latency of the system information is 100 ms, the SIB3, the SIB4, and the SIB5 satisfy the latency condition, but the SIB6, the SIB7, and the SIB8 may not satisfy the transmission latency condition. For example, the access network device may send the SIB6, the SIB7, and the SIB8 to the terminal after 100 ms, which exceeds the latency threshold of 100 ms. In this case, the SIB6, the SIB7, and the SIB8 in W2 may also be sent in W1. FIG. 3b is a schematic diagram of another system information window according to this application. System information in the system information window W2 is sent together in the system information window W1. Therefore, a latency problem can be resolved. It may be understood that, the latency threshold may be sent by the access network device to the terminal, or may be predefined by a protocol. Optionally, the access network device may indicate whether each SIB needs to satisfy the transmission latency condition.

In another case, using the foregoing example as an example, if scheduling periods of the SIB10 and the SIB 11 are 640 ms, a sequence of the SIB 10 and the SIB 11 in the scheduling information is system information SI 3. At a time of time domain overlapping, in the manner shown in FIG. 3a, system information of the three SIBs having different scheduling periods needs to be sent separately in sequence. The system information window W1 occupies 0-60 ms from the start position, and the system information window W2 occupies 61-120 ms. To be specific, the system information block SIB3, SIB4, and SIB5 are sent to the terminal within 0-60 ms from the start position, the system information block SIB6, SIB7, and SIB8 are sent to the terminal within 61-120 ms from the start position, and the system information block SIB10 and SIB11 are sent to the terminal within 121-180 ms from the start position. To be specific, the system information window W1 occupies 0-60 ms, the system information window W2 occupies 61-120 ms, and the system information window W3 occupies 121-180 ms. Optionally, the access network device indicates that the SIB3, the SIB4, the SIB5, the SIB6, the SIB7, and the SIB8 need to satisfy the transmission latency condition, where the transmission latency condition is that the transmission latency needs to be shorter than or equal to 100 ms; and the SIB 10 and the SIB 11 do not need to satisfy the transmission latency condition. If a latency threshold for a transmission latency of the system information is 100 ms, the SIB3, the SIB4, and the SIB5 satisfy the transmission latency condition, the SIB6, the SIB7, and the SIB8 do not satisfy the transmission latency condition, and although transmission latencies of the SIB 10 and the SIB 11 are 121-180 ms, the SIB 10 and the SIB11 do not need to satisfy the transmission latency condition. Therefore, in this case, the SIB6, the SIB7, and the SIB8 in W2 may also be sent in W1. In an implementation, although data is no longer sent in the system information window W2, the system information window W2 is still reserved. To be specific, the terminal still requires W3 of 121-180 ms to receive the SIB10 and the SIB11. In another feasible solution, the system information window W2 may be canceled. To be specific, the terminal may receive the SIB10 and the SIB11 from the system information window W2 of 61-120 ms. It may be understood that, the latency threshold may be sent by the access network device to the terminal, or may be predefined by a protocol.

In another feasible solution, the access network device may directly indicate whether SIBs having different scheduling periods need to be sent in a same SI window at a time of time domain overlapping, or indicate whether SI having different scheduling periods needs to be sent in a same SI window at a time of time domain overlapping. It may be understood that, the access network device may further indicate, after different SI is sent in a same SI window, whether the SI window corresponding to the SI needs to be reserved. Alternatively, whether the SI window corresponding to the SI needs to be reserved after the SI is sent in another SI window may be predefined by a protocol.

It may be understood that, in a case, when simultaneous scheduling of SIBs in adjacent system information windows is required in time domain, that is, at a time of time domain overlapping, the access network device may directly place system information blocks of different periods in a same system information window. Optionally, in this case, a network side device also needs to indicate whether SIBs having different scheduling periods need to be sent in a same SI window at a time of time domain overlapping, or indicate whether SI having different scheduling periods needs to be sent in a same SI window at a time of time domain overlapping. It may be understood that, the access network device may further indicate, after different SI is sent in a same SI window, whether the SI window corresponding to the SI needs to be reserved. Alternatively, whether the SI window corresponding to the SI needs to be reserved after the SI is sent in another SI window may be predefined by a protocol.

In the manner 2, SIBs having different scheduling periods may be mapped to one system information window. Specifically, when simultaneous scheduling of SIBs in adjacent system information windows is required in time domain, that is, at a time of time domain overlapping, SIBs scheduled in different system information windows at the time may all be scheduled in a first system information window starting from the time. For example, when time domain overlapping exists between the system information window W1 and the system information window W2, starting from the time of time domain overlapping, W1 precedes W2 in time domain, and the SIB3, the SIB4, and the SIB5 in the system information window W1, and the SIB6, the SIB7, and the SIB8 in the system information window W2 may all be sent in the system information window W1. For a system information window in which no time domain overlapping occurs, only original SIBs are sent. As shown in FIG. 3b, only the system information block SIB3, SIB4, and SIB5 are still sent in the system information window W1. Specifically, which of the foregoing manners is used may be pre-agreed upon by the network side device and the terminal. This ensures that the terminal can obtain a system information block in a corresponding system information window.

In an optional solution, when SI in a SI window is not sent, the access network device may further indicate whether a SI window needs to be reserved. Alternatively, when SI in a SI window is not sent, whether the SI window corresponding to the SI needs to be reserved may be predefined by a protocol. The UE determines, in a manner predefined by the protocol, whether the SI window corresponding to the SI is reserved.

For example, a duration of a system information window is 60 ms, scheduling periods of the SIB3, the SIB4, and the SIB5 are 160 ms, and a sequence of the SIBs in the scheduling information is SI 1; scheduling periods of the SIB6, the SIB7, and the SIB8 are 320 ms, and a sequence of the SIBs in the scheduling information is SI 2; and scheduling periods of the SIB10 and the SIB11 are 640 ms, and a sequence of the SIBs in the scheduling information is SI 3. In this case, starting from the time of time domain overlapping, the system information window W1 occupies 0-60 ms, and the system information window W2 occupies 61-120 ms. To be specific, the system information block SIB3, SIB4, and SIB5 are sent to the terminal within 0-60 ms from the start position, the system information block SIB6, SIB7, and SIB8 are sent to the terminal within 61-120 ms from the start position, and the system information block SIB10 and SIB11 are sent to the terminal within 121-180 ms from the start position. If the access network device indicates that none of the SIB6, the SIB7, and the SIB8 is broadcast in a current SI window, the access network device may further indicate, to the UE, whether a SI window corresponding to the SI 2 at the time of time domain overlapping is reserved, or whether a SI window corresponding to the SI 2 at the time of time domain overlapping is reserved may be predefined by the protocol. The UE determines, according to the indicator from the access network device or the manner predefined by the protocol, whether the SI window corresponding to the SI 2 is reserved.

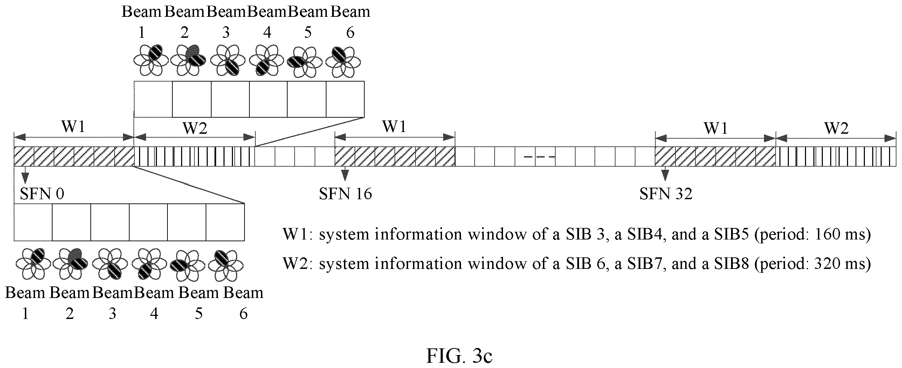

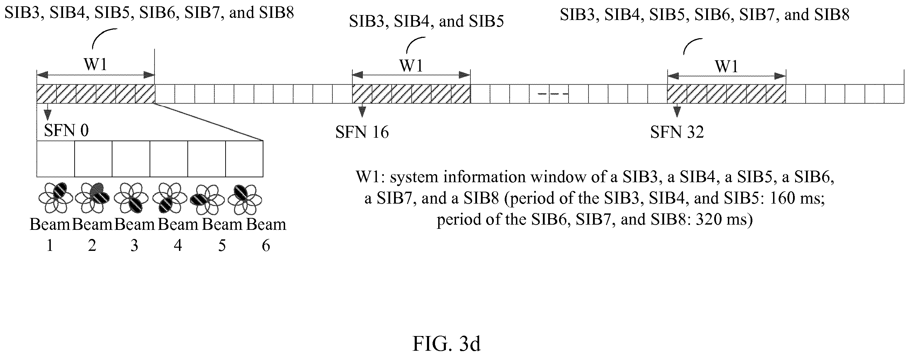

FIG. 3c and FIG. 3d are schematic diagrams of system information windows in another high frequency scenario according to this application. The system information window shown in FIG. 3c corresponds to the system information window shown in FIG. 3a. A main difference between the two system information windows is as follows: The system information window shown in FIG. 3c is generally applicable to a high frequency scenario. In this scenario, the access network device performs beam sweeping to provide services for terminals in each direction. In this case, the duration of the system information window needs to be an integer multiple of a beam sweeping period. Using FIG. 3c as an example, to provide services for terminal devices in each direction, the access network device needs to perform sweeping for six times. Using one sweeping period as an example, a duration of the system information window W1 is relatively long, and the SIB in the system information window W2 can be sent only after a long waiting time, resulting in a relatively long transmission latency of the system information in W2.

For the scenario shown in FIG. 3c, if the SIBs in the system information window W2 are sent in the system information window W1 in the manner shown in FIG. 3b, the system information window shown in FIG. 3d may be formed. A communication method shown in FIG. 3d may resolve a latency problem that exists in a communication method shown in FIG. 3c.

A time of sending a system information block in a system information window is referred to as a time interval. A time interval is associated with a piece of control information, and the control information is sent by the access network device to the terminal, indicating at least one system information block to be sent in a time interval of the system information window and a time-frequency resource occupied by the at least one system information block.

In an implementation, a method for sending a system information block may be: the access network device encodes all system information blocks having a same scheduling period jointly into a Radio Resource Control (Radio Resource Control, RRC) message, and then broadcasts the RRC message in the scheduling period. For example, using FIG. 3a as an example, for the system information window W1, the access network device encodes the SIB3, the SIB4, and the SIB5 jointly into an RRC message, and then broadcasts the RRC message in one or more time intervals in the system information window W1. Optionally, before this, the access network device receives a request message sent by the terminal, where the request message requests at least one of the system information blocks having the same scheduling period. Because the terminal may learn of a scheduling period of a system information block that the terminal wants to obtain, the terminal may listen to a channel in the corresponding system information window W1 to obtain the required system information block from the channel. For example, if a terminal 1 needs to obtain the SIB3, the terminal 1 listens to the channel in the system information window W1 to obtain an RRC message, obtains the SIB3, the SIB4, and the SIB5 by decoding the RRC message, and obtains, from the SIB3, the SIB4, and the SIB5, the SIB3 required by the terminal 1. For another example, if a terminal 2 needs to obtain the SIB7 and the SIB8, the terminal 2 listens to a channel in the system information window W2 to obtain an RRC message, obtains the SIB6, the SIB7, and the SIB8 by decoding the RRC message, and obtains, from the SIB6, the SIB7, and the SIB8, the SIB7 and the SIB8 that are required by the terminal 2.

A problem of high overheads and a high failure rate of decoding by the terminal exists in the foregoing implementation. Because the access network device jointly encodes all system information blocks that can be sent in a system information window into an RRC message every time, information that the terminal needs to decode increases, a failure rate of decoding is increased, and more overheads are caused.

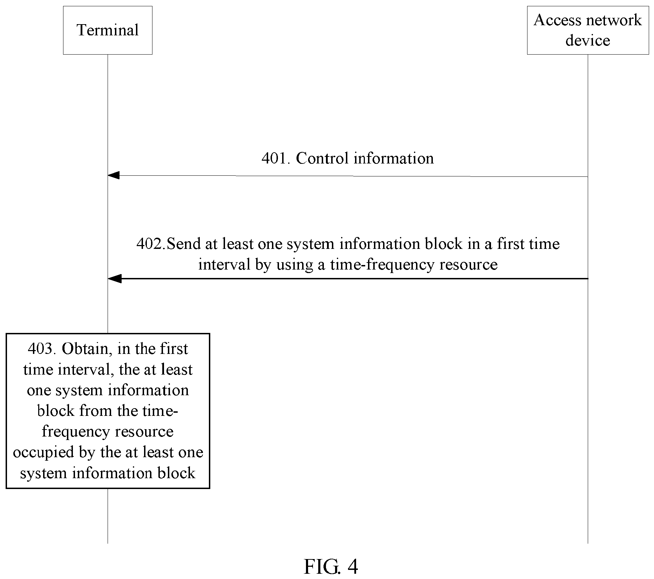

To resolve the foregoing problem, as shown in FIG. 4, this application provides a communication method. The method is applicable to the system architecture shown in FIG. 1, and the method is applicable to a schematic diagram of any system information window in FIG. 3a to FIG. 3d. The method includes the following steps.

Step 401: An access network device sends control information to a terminal, and the terminal receives the control information sent by the access network device.

The control information is used to indicate at least one system information block to be sent in a first time interval of a first system information window and a time-frequency resource occupied by the at least one system information block. The at least one system information block is a part of system information blocks that can be sent in the first system information window, and the at least one system information block is a system information block that needs to be sent in the first time interval.

The system information blocks that can be sent in the first system information window are system information blocks that can be sent in the first system information window, or are understood as system information blocks that a network side determines to send in the first system information window.

Using FIG. 3a as an example, assuming that the first system information window is W1, SIBs that can be sent in the first system information window are the SIB3, the SIB4, and the SIB5. The first system information window includes one or more time intervals. If a SIB is sent in one of the time intervals, the time interval is referred to as a first time interval, and the SIB sent in the first time interval is a part of system information blocks in the SIB3, the SIB4, and the SIB5. It may also be understood that, the at least one system information block to be sent in the first time interval is a system information block that can be sent in the first system information window, and the SIBs that need to be sent in the first time interval have a same scheduling period.

A person skilled in the art may understand that, in a multi-terminal scenario, the access network device may send all SIBs, that is, the SIB3, the SIB4, and the SIB5, in W1. The SIB3, the SIB4, and the SIB5 are separately encoded, for example, encoded into three RRC messages. For a terminal, the terminal may obtain a required SIB from an RRC message, without receiving all of the SIB3, the SIB4, and the SIB5. In addition, in a single-terminal scenario, the access network device may also send all SIBs in W1, where each SIB is separately encoded, so that other SIBs can be received successfully when some SIBs fail to be received. For example, when the SIB3 fails to be received, the SIB4 and the SIB5 may be received successfully.

For another example, using FIG. 3b as an example, assuming that the first system information window is W1, SIBs that can be sent in the first system information window are the SIB3, the SIB4, the SIB5, the SIB6, the SIB7, and the SIB8. SIBs that are sent in the first time interval are a part of system information blocks in the SIB3, the SIB4, the SIB5, the SIB6, the SIB7, and the SIB8, and scheduling periods of the SIBs that need to be sent in the first time interval may be different.

In a possible implementation, whether a system information window is selected in the manner shown in FIG. 3a or the manner shown in FIG. 3b may be determined by the network side, or is pre-agreed upon by the terminal and the network side. Generally, if a transmission latency of system information is relatively long, the system information can be sent in the manner shown in FIG. 3b. To be specific, if a transmission latency of the system information block in this application does not satisfy a transmission latency condition, the system information can be sent in the manner shown in FIG. 3b.

In an implementation, the control information may be, for example, in downlink control information (downlink control information, DCI), or on a physical downlink control channel (physical downlink control channel, PDCCH), or on an enhanced physical downlink control channel (enhanced physical downlink control channel, EPDCCH), or on a narrowband physical downlink control channel (narrowband physical downlink control channel, NPDCCH).

The control information indicates content in two aspects. In one aspect, the control information indicates one or several SIBs to be sent in the first time interval in the first system information window. In the other aspect, the control information indicates locations of time-frequency resources occupied by the SIBs to be sent. It may be understood that, the locations of the time-frequency resources occupied by the SIBs to be sent may be different from each other, or may be the same.

Step 402: The access network device sends at least one system information block in a first time interval by using a time-frequency resource.

The at least one system information block is a system information block that is indicated by the control information and is to be sent in the first time interval of the first system information window, and the time-frequency resource is a time-frequency resource occupied by the at least one system information block.

In an implementation, the time-frequency resource occupied by the at least one system information block is a time-frequency resource shared by the at least one system information block. The shared time-frequency resource is a time-frequency resource allocated to the at least one system information block to be sent. The time-frequency resource is used as an entirety. For example, in a specific implementation, the SIBs that need to be sent in the first time interval may be jointly encoded in a joint encoding mode, and sent to the terminal by using a shared time-frequency resource. Joint encoding may also be understood as unified encoding. Joint encoding is jointly encoding at least two SIBs that need to be sent in a time interval, and sending the two SIBs to the terminal by using a same time-frequency resource.

In another implementation, the time-frequency resource occupied by the at least one system information block is a time-frequency resource respectively occupied by the at least one system information block. For example, in a specific implementation, each SIB that needs to be sent in the first time interval may be separately encoded in a separate encoding mode, and sent to the terminal by using a time-frequency resource occupied by the SIB.

It may be understood that, joint encoding may mean that a plurality of system information blocks are sent in one Radio Resource Control (Radio Resource Control, RRC) message, and separate encoding means that each system information block is sent separately in one Radio Resource Control message. For detailed descriptions about joint encoding and separate encoding, refer to related standard content.

Step 403: The terminal obtains, in the first time interval, the at least one system information block from the time-frequency resource occupied by the at least one system information block.

It may be understood that, the access network device may perform all or some of the steps in the foregoing embodiment. The steps or operations are merely examples. In this application, other operations or variants of operations may be further performed. In addition, each step may be performed in different sequences presented in the foregoing embodiment, and in some implementations, not all operations in the foregoing embodiment may need to be performed.

In the foregoing embodiment, because the system information block sent by the access network device to the terminal in the first time interval is a part of the system information blocks that can be sent in the first system information window, a quantity of sent system information blocks can be reduced, and further, a success rate of decoding by the terminal is increased, and power consumption is reduced.

Further, in a specific implementation, the access network device indicates, by using the control information, a system information block that needs to be sent in the first time interval. Time-frequency resources occupied by system information blocks that are sent in one time interval may be the same or may be different. A time-frequency resource occupied by the system information block is indicated by using the control information. When time-frequency resources occupied by system information blocks sent in one time interval are different, the terminal may obtain, from a location of a corresponding time-frequency resource based on a requirement of the terminal, a system information block required by the terminal. The terminal can decode the required system information block separately, without decoding all system information blocks that can be sent in a system information window. Therefore, the success rate of decoding by the terminal can be increased and overheads can be reduced. In addition, when time-frequency resources occupied by system information blocks sent in one time interval are the same, if a quantity of system information blocks sent in the time interval is less than a quantity of system information blocks that can be sent in a system information window to which the time interval belongs, although the terminal needs to decode all received system information blocks, a quantity of system information blocks that need to be decoded is reduced. Therefore, the success rate of decoding by the terminal can also be increased and overheads can be reduced.

In another implementation, the system information blocks sent by the access network device to the terminal in the first time interval are all of the system information blocks that can be sent in the first system information window, and system information blocks sent in one time interval respectively occupy different time-frequency resources. In this case, although the access network device sends all of the system information blocks that can be sent in the first system information window, the system information blocks are sent on different time-frequency resources. Therefore, the terminal may obtain, from a location of a corresponding time-frequency resource based on a requirement of the terminal, a system information block required by the terminal. The terminal can decode the required system information block separately, without decoding all the system information blocks sent by the access network device. Therefore, the success rate of decoding by the terminal can also be increased and overheads can be reduced.

Optionally, at a time of time domain overlapping, the terminal may determine, based on a latency threshold and indication information sent by the access network device, a system information window for receiving a system information block. For a specific determining method, refer to the descriptions about the foregoing manner 2. It may be understood that, a receiving action of the terminal may correspondingly replace a sending action of the access network device in the manner 2.

For example, in the foregoing step 401, the access network device sends the control information to the terminal in at least the following manners:
Manner 1: The control information includes a type of each system information block to be sent and a time-frequency resource occupied by the system information block.

In this manner, the control information explicitly includes the type of each system information block to be sent and the time-frequency resource on which the system information block is located, and the time-frequency resource on which each system information block is located may be the same or may be different. In an implementation, the type of each system information block may be distinguished by an identifier of the system information block. For example, if system information blocks to be sent in the first time interval are the SIB3 and the SIB5, information included in the control information is presented in a tabular form, and may be shown in Table 1-1, where locations of time-frequency resources of the SIB3 and the SIB5 are the same, or may be shown in Table 1-2, where locations of time-frequency resources of the SIB3 and the SIB5 are different. In a specific implementation, for example, a location of the time-frequency resource of each SIB may be sent sequentially based on a sequence number of the SIB. In Table 1-2, for example, the location of the time-frequency resource of each SIB is sent in ascending order of sequence numbers of SIBs. Certainly, herein the tabular form is used merely as an example, and does not represent that the specific implementation of the control information is limited to the tabular form.

**Table 1-1 First implementation of control information (a same time-frequency resource is occupied)**

| **Type of system information block** | **Occupied time-frequency resource** |
|---|---|
| SIB3 | Locations of time-frequency resources of the SIB3 and the SIB5 |
| SIB5 | |

**Table 1-2 First implementation of control information (different time-frequency resources are occupied)**

| **Type of system information block** | **Occupied time-frequency resource** |
|---|---|
| SIB3 | Location of a time-frequency resource of the SIB3 |
| SIB5 | Location of a time-frequency resource of the SIB5 |

In the method 1, with an explicit manner, the control information carries the type of each of the at least one system information block to be sent in the first time interval in the first system information window, for ease of implementation.

Manner 2: The control information includes a first bitmap and a time-frequency resource occupied by a system information block.

In this manner, the control information indicates, by using the first bitmap, a type of the at least one system information block to be sent in the first time interval in the first system information window, where a quantity of bits of the first bitmap is a quantity of system information blocks that can be sent in the first system information window. Using FIG. 3a as an example, if the first system information window is W1, because the system information blocks that can be sent in the first system information window are the SIB3, the SIB4, and the SIB5, the quantity of bits of the first bitmap is 3. Using FIG. 3b as an example, if the first system information window is W1, because the system information blocks that can be sent in the first system information window are the SIB3, the SIB4, the SIB5, the SIB6, the SIB7, and the SIB8, the quantity of bits of the first bitmap is 6.

The bits of the first bitmap correspond, on a one-to-one basis, to the system information blocks that can be sent in the first system information window. In the first bitmap, a value of a bit corresponding to the at least one system information block to be sent in the first time interval is used to indicate the at least one system information block to be sent in the first time interval. Optionally, sequence numbers of SIBs respectively corresponding to the bits of the first bitmap from left to right increase sequentially, or sequence numbers of SIBs respectively corresponding to the bits of the first bitmap from left to right decrease sequentially.

In an example, referring to FIG. 3a, assuming that the first system information window is W1, the system information blocks that can be sent in W1 are the SIB3, the SIB4, and the SIB5, and therefore the quantity of bits of the bitmap is 3. For example, the three bits of the bitmap from left to right are respectively used to indicate whether to send the SIB3, the SIB4, and the SIB5, or the bits from left to right may be respectively used to indicate whether to send the SIB5, the SIB4, and the SIB3. Using an example in which the three bits of the bitmap from left to right are respectively used to indicate whether to send the SIB3, the SIB4, and the SIB5, "1" indicates sending, and "0" indicates not sending. If the access network device sends the SIB3 and the SIB5 in the first time interval of W1, the bitmap is 101; or if the access network device sends the SIB3 and the SIB4 in the first time interval of W1, the bitmap is 110, or the like. In another example, referring to FIG. 3b, assuming that the first system information window is W1, the system information blocks that can be sent in W1 are the SIB3, the SIB4, the SIB5, the SIB6, the SIB7, and the SIB8, and therefore the quantity of bits of the bitmap is 6. For example, the six bits of the bitmap from left to right are respectively used to indicate whether to send the SIB3, the SIB4, the SIB5, the SIB6, the SIB7, and the SIB8, or the bits from left to right may be respectively used to indicate whether to send the SIB8, the SIB7, and the SIB6, the SIB5, the SIB4, and the SIB3. Assuming that the six bits of the bitmap from left to right are respectively used to indicate whether to send the SIB3, the SIB4, the SIB5, the SIB6, the SIB7, and the SIB8, "1" indicates sending, and "0" indicates not sending. If the access network device sends the SIB3, the SIB5, and the SIB6 in the first time interval of W1, the bitmap is 101100; or if the access network device sends the SIB3, the SIB4, and the SIB7 in the first time interval of W1, the bitmap is 110010, or the like.

Same as that in the manner 1, the control information further indicates locations of time-frequency resources occupied by the system information blocks sent in the first time interval, where the time-frequency resources occupied by the system information blocks may be the same or may be different. For example, if the system information blocks to be sent in the first time interval are the SIB3 and the SIB5, information included in the control information is presented in a tabular form, and may be shown in Table 2-1, where locations of time-frequency resources of the SIB3 and the SIB5 are the same, or may be shown in Table 2-2, where locations of time-frequency resources of the SIB3 and the SIB5 are different. In a specific implementation, for example, the location of the time-frequency resource of each SIB may be sent sequentially based on a sequence number of the SIB. In Table 2-2, for example, the location of the time-frequency resource of each SIB is sent in ascending order of sequence numbers of SIBs. Certainly, herein the tabular form is used merely as an example, and does not represent that the specific implementation of the control information is limited to the tabular form.

**Table 2-1 Second implementation of control information (a same time-frequency resource is occupied)**

| **Type of system information block** | **Occupied time-frequency resource** |
|---|---|
| 101 | Locations of time-frequency resources of the SIB3 and the SIB5 |

**Table 2-2 Second implementation of control information (different time-frequency resources are occupied)**

| **Type of system information block** | **Occupied time-frequency resource** |
|---|---|
| 101 | Location of a time-frequency resource of the SIB3 |
| | Location of a time-frequency resource of the SIB5 |

In the foregoing table, the time-frequency resource may be a PDSCH.

In the manner 2, the control information carries a bitmap to indicate a type of a system information block. In comparison with the manner 1, this manner can reduce signaling overheads. For example, there are 10 system information blocks in total, which are the SIB3 to the SIB12 respectively. If the manner 1 is used, at least four bits (2⁴ is equal to 16) are required for indicating each system information block. In the manner 2, because the quantity of bits of the first bitmap is equal to the quantity of system information blocks that can be sent in the first system information window, for example, the quantity of system information blocks that can be sent in the first system information window is 3, a bitmap of only three bits is required, and therefore signaling overheads are reduced.

Manner 3: The control information includes a SI RNTI corresponding to each system information block to be sent in the first time interval and a time-frequency resource occupied by the system information block.

In the manner 3, the control information includes at least one system information radio network temporary identifier (System Information Radio Network Temporary Identifier, SI RNTI), where each SI RNTI corresponds to one system information block. To be specific, the system information blocks to be sent in the first time interval are respectively identified by different SI RNTIs, and different SI RNTIs may be used to descramble corresponding system information blocks from corresponding time-frequency resources. For example, if the system information blocks to be sent in the first time interval are the SIB3 and the SIB5, information included in the control information is presented in a tabular form, and may be shown in Table 3-1, where locations of time-frequency resources of the SIB3 and the SIB5 are the same, or may be shown in Table 3-2, where locations of time-frequency resources of the SIB3 and the SIB5 are different. In a specific implementation, for example, the location of the time-frequency resource of each SIB may be sent sequentially based on a sequence number of the SIB. In Table 3-2, for example, the location of the time-frequency resource of each SIB is sent in ascending order of sequence numbers of SIBs. Certainly, herein the tabular form is used merely as an example, and does not represent that the specific implementation of the control information is limited to the tabular form.

**Table 3-1 Third implementation of control information (a same time-frequency resource is occupied)**

| **Type of system information block** | **Occupied time-frequency resource** |
|---|---|
| SI RNTI3 | Locations of time-frequency resources of the SIB3 and the SIB5 |
| SI RNTI5 | |

**Table 3-2 Third implementation of control information (different time-frequency resources are occupied)**

| **Type of system information block** | **Occupied time-frequency resource** |
|---|---|
| SI RNTI3 | Location of a time-frequency resource of the SIB3 |
| SI RNTI5 | Location of a time-frequency resource of the SIB5 |

In Tables 3-1 and 3-2, the SI RNTI 3 may be used to descramble the SIB3, the SI RNTI 5 may be used to descramble the SIB5, and the time-frequency resource may be a PDSCH.

In the manner 3, different SI RNTIs are used to indicate different system information blocks, so that when the terminal performs descrambling, an error does not easily occur, and that accuracy is improved.

In a possible implementation, the access network device further receives a request message sent by the terminal, where the request message is used to request to obtain the at least one system information block. Because a plurality of terminals may all send request messages to the access network, all requesting to obtain system information blocks, contention occurs. If a terminal contends successfully, that is, the access network successfully receives the request message sent by the terminal, the access network device sends, to the terminal, a response message used to indicate that the request message is successfully received.

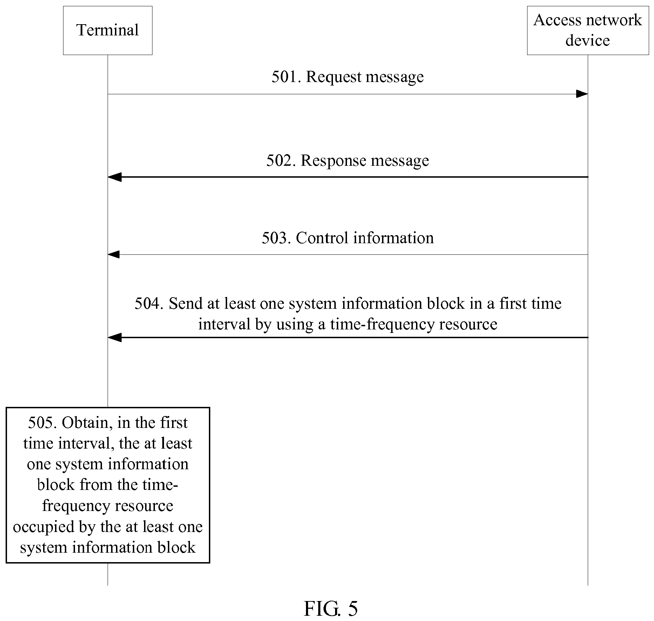

Further, steps in which the terminal sends a request message and receives a response message are added to the procedure shown in FIG. 4, and a schematic diagram of a communication method shown in FIG. 5 is obtained. The method includes the following steps.

Step 501: A terminal sends a request message to an access network device, and the access network device receives the request message sent by the terminal.

The request message is used to request a system information block.

In an implementation, the request message may include a second bitmap, where a quantity of bits of the second bitmap is a quantity of system information blocks that can be sent by the access network device, and the bitmap is used to indicate at least one system information block that is requested. To be specific, the terminal requests a system information block by the bitmap. It may be understood that, the quantity of system information blocks that can be sent by the access network device is a quantity of system information blocks that can be by the access network device based on the request of the terminal. For example, if the quantity of system information blocks that can be sent by the access network device based on the request of the terminal is 10, the quantity of bits of the second bitmap sent by the terminal to the access network device is 10. For example, the bits of the second bitmap from left to right respectively indicate a SIB3 to a SIB12; and if a bitmap sent by a terminal 1 to the access network device is 1000000000, it indicates that the terminal 1 requests the SIB3.

In still another implementation, the request message carries a specific SIB type, used to indicate a requested system information block.

Step 502: The access network device sends a response message to the terminal, and the terminal receives the response message sent by the access network device.

In an implementation, if the terminal requests a system information block by a bitmap, for example, the request message sent by the terminal to the access network device includes the second bitmap, when the access network device successfully receives the request of the terminal, the access network device may directly send, to the terminal via a response message, the second bitmap sent by the terminal. When the terminal receives the second bitmap sent by the access network device and determines that the second bitmap is the same as the second bitmap sent by the terminal, the terminal determines that the request for the corresponding system information block is sent successfully, and therefore does not need to send a request message again. Then the terminal receives, in a corresponding system information window, the system information block sent by the access network device. For example, if the bitmap sent by the terminal 1 to the access network device in step 501 is 1000000000, it indicates that the SIB3 needs to be requested; and when the access network device successfully receives the request of the terminal 1, the response message sent to the terminal includes the bitmap 1000000000, notifying the terminal that the request succeeds, and that the access network device will send the SIB3.

In another implementation, in step 502, the response message sent by the access network device to the terminal includes a third bitmap, where a quantity of bits of the third bitmap is the quantity of system information blocks that can be sent by the access network device, and a value of a bit corresponding to the at least one system information block is used to indicate that the at least one system information block is to be sent. The third bitmap is used to indicate that the access network device receives the request message successfully. After receiving the third bitmap sent by the access network device, the terminal further determines whether the system information block requested by the terminal is requested successfully.

For example, in step 501, if the terminal 1 requests the system information block SIB3 from the access network device, and a terminal 2 requests the system information block SIB7, the third bitmaps sent by the access network device to the terminal 1 and the terminal 2 are both 1000100000, indicating that system information blocks to be sent by the access network device in a time interval of a corresponding system information window are the SIB3 and the SIB7 respectively.

Therefore, for the terminal 1, when receiving the response message sent by the access network device, the terminal obtains the third bitmap 1000100000 from the response message, and determines that the access network device will send the SIB3. Therefore, the terminal 1 determines that the access network device successfully receives the request message sent by the terminal 1. For the terminal 2, when receiving the response message sent by the access network device, the terminal obtains the third bitmap 1000100000 from the response message, and determines that the access network device will send the SIB7. Therefore, the terminal 2 may determine that the access network device successfully receives the request message sent by the terminal 2.

On the other hand, for the terminal 1, if the terminal 1 determines, after receiving the third bitmap, that the SIB7 also needs to be requested, because the terminal 1 determines, based on the third bitmap, that the access network device will also send the SIB7, the terminal does not need to send a request message again. Because the terminal 1 has determined, based on the third bitmap in the response message sent by the access network device, that the access network device will send the SIB7, the terminal 1 only needs to prepare for reception in a corresponding system information window. Therefore, the implementation can reduce signaling overheads of the terminal 1. Likewise, for the terminal 2, signaling overheads can also be reduced.

In still another optional implementation, if the terminal carries a specific SIB type in the request message, when the access network device successfully receives the request of the terminal, the access network device may directly send, to the terminal via a response message, the SIB type sent by the terminal. Alternatively, the access network device may send a plurality of SIB types to the terminal via a response message. For details, refer to the embodiment in which the access network device sends a response message when the terminal sends a bitmap. It may be understood that, in this case, the bitmap in the foregoing embodiment may be replaced with the SIB type.

Step 503: The access network device sends control information to the terminal, and the terminal receives the control information sent by the access network device.

Step 504: The access network device sends at least one system information block in a first time interval by using a time-frequency resource.

Step 505: The terminal obtains, in the first time interval, the at least one system information block from the time-frequency resource occupied by the at least one system information block. Steps 503-505 are the same as steps 401-403 in FIG. 4. For details, refer to the foregoing descriptions. Details are not described again herein.

It may be understood that, the access network device may perform all or some of the steps in the foregoing embodiment. The steps or operations are merely examples. In this application, other operations or variants of operations may be further performed. In addition, each step may be performed in different sequences presented in the foregoing embodiment, and in a possible implementation, not all operations in the foregoing embodiment need to be performed.

It should be noted that, the foregoing embodiment may be intended for interaction between the access network device and one terminal. Because the manner of sending control information by the access network device may be broadcasting or sending on a common resource, the foregoing embodiment may be further intended for interaction between the access network device and a plurality of terminals. To be specific, at least one system information block sent by the access network device in one time interval is intended for a plurality of terminals served by the access network device.

For example, using two terminals as an example, if the terminal 1 requests the SIB3 from the access network device, and the terminal 2 requests the SIB4 from the access network device, the access network device may send the SIB3 and the SIB4 in a time interval of a same system information window because scheduling periods of the SIB3 and the SIB4 are the same. To be specific, the access network device may broadcast the SIB3 and the SIB4 simultaneously. Therefore, the terminal 1 may detect, in the system information window, that the access network device has sent the SIB3, then obtain the time-frequency resource on which the SIB3 is located, and obtain the SIB3 from the time-frequency resource through decoding. Likewise, the terminal 2 may detect, in the same system information window, that the access network device has sent the SIB4, then obtain the time-frequency resource on which the SIB4 is located, and obtain the SIB4 from the time-frequency resource through decoding.

In this embodiment, the access network device may broadcast, in a time interval of a same system information window based on request messages sent by a plurality of terminals, system information blocks having a same scheduling period and requested by the terminals, or system information blocks having different scheduling periods. Further, the system information blocks sent by the access network device may respectively occupy different time-frequency resources. To be specific, the access network device encodes each system information block separately. Therefore, to obtain a system information block required by the terminal, the terminal needs to decode the system information block only from a corresponding time-frequency resource, without decoding time-frequency resources occupied by all system information blocks. Therefore, a success rate can be increased. Further, the system information blocks sent by the access network device may alternatively occupy a same time-frequency resource. To be specific, the access network device encodes the system information blocks jointly.

In this application, in a design, the access network device encodes system information blocks in a system information window separately, and sends different system information blocks by using different time-frequency resources, so that the terminal can directly obtain, through decoding, a system information block required by the terminal. Therefore, a success rate of decoding can be increased.

In another design, the access network device encodes system information blocks in a system information window jointly, but the encoded system information blocks include only the system information block requested by the terminal, instead of all system information blocks that can be sent in the system information window. Therefore, signaling overheads of the access network device can be reduced, an amount of information decoded by the terminal is reduced, and a success rate of decoding by the terminal is increased. In another design, the access network device may further send, in a same system information window, system information blocks having different scheduling periods. This can reduce transmission latencies of the system information blocks.

Currently, in a distributed radio access network, to reduce deployment costs of an access network device, a CU-DU architecture is introduced, where a radio access network side of the distributed radio access network is divided into a central unit (Central Unit, CU) and a distributed unit (Distributed Unit, DU). In an example, the CU supports at least a function of a radio resource control (Radio Resource Control, RRC) layer, and the DU supports at least a function of a radio link control (Radio Link Control, RLC) layer and a function of a media access control (Media Access Control, MAC) layer.

In an optional design, the CU may further support a function of a service data adaptation protocol (Service Data Adaptation Protocol, SDAP) layer, or all or a part of functions of a packet data convergence protocol (Packet Data Convergence Protocol, PDCP) layer. The functions of the packet data convergence protocol layer may include a function of a packet data convergence protocol-control plane (Packet Data Convergence Protocol-Control plane, PDCP-C) and a function of a packet data convergence protocol-user plane (Packet Data Convergence Protocol-User plane, PDCP-U).

In another optional design, the CU may be further divided into a control plane (CU-CP) and a user plane (CU-UP), where the CU-CP is responsible for a function of the control plane, and mainly includes RRC and a PDCP-C. The PDCP-C is mainly responsible for encryption and decryption of control plane data, integrity protection, data transmission, and the like. The CU-UP is responsible for a function of the user plane, and mainly includes SDAP and a PDCP-U. SDAP is mainly responsible for processing data of a core network and mapping a flow (flow) to a bearer. The PDCP-U is mainly responsible for encryption and decryption of user plane data, integrity protection, header compression, sequence number maintenance, data transmission, and the like. The CU-CP and the CU-UP are connected via an E1 interface. The CU-CP represents that a base station is connected to the core network via an Ng interface and connected to the DU via F1-C. The CU-UP is connected to the DU via F1-U.

It should be noted that, in an actual application, the PDCP-C may also be located in the CU-UP.

It may be understood that, the name of the CU, the DU, or the interface is merely an example. In this embodiment of this application, the name of the interface is not specifically limited.

In this embodiment of this application, other protocol stack division manners are also available on the CU and the DU. For example, depending on a network configuration, when the CU and the DU are deployed, RRC layer may also be distributed on the CU, and PDCP, RLC, and MAC protocol layers are distributed on the DU. For other division manners of the protocol stacks between the CU and the DU, refer to TR 38.801 v14.0.0.

Generally, one CU may be connected to a plurality of DUs. In an implementation, the DU may be implemented by the apparatus shown in FIG. 2, and the CU may also be implemented by the apparatus shown in FIG. 2.

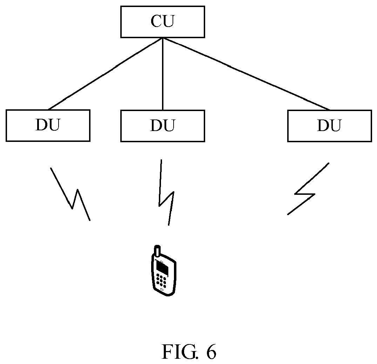

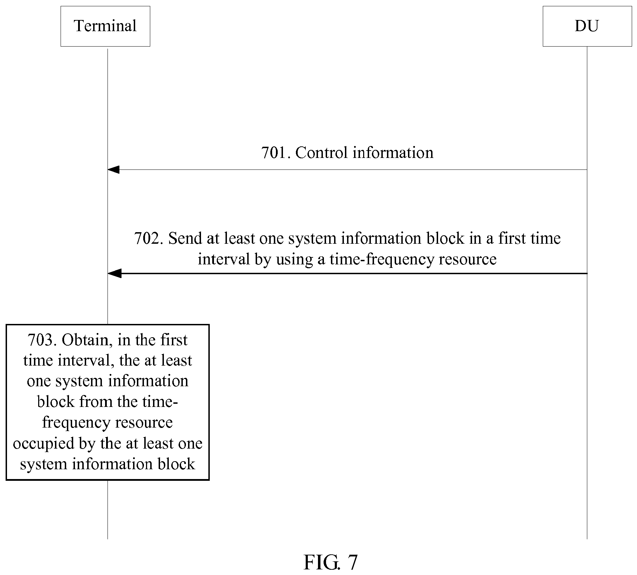

FIG. 6 is a diagram of another possible system architecture to which this application is applicable, where one CU is connected to a plurality of DUs, and a terminal may perform wireless communication with a DU via an air interface. Based on the system architecture shown in FIG. 6, the present invention provides another communication method. As shown in FIG. 7, the method includes the following steps.

Step 701: A DU sends control information to a terminal, and the terminal receives the control information sent by the DU.

Step 702: The DU sends at least one system information block in a first time interval by using a time-frequency resource.

Step 703: The terminal obtains, in the first time interval, the at least one system information block from the time-frequency resource occupied by the at least one system information block.

It may be understood that, the DU may perform all or some of the steps in the foregoing embodiment. The steps or operations are merely examples. In this application, other operations or variants of operations may be further performed. In addition, each step may be performed in different sequences presented in the foregoing embodiment, and not all operations in the foregoing embodiment may need to be performed.

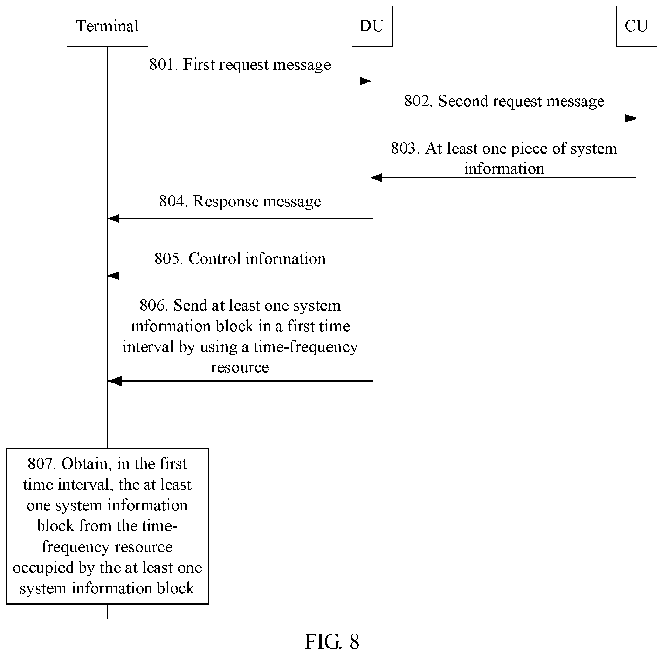

A main difference between the embodiment shown in FIG. 7 and the embodiment shown in FIG. 4 lies in that the steps performed by the access network device in FIG. 4 are performed by the DU instead in FIG. 7. To be specific, the DU directly communicates with the terminal. For a specific implementation of the embodiment shown in FIG. 7, refer to the foregoing descriptions. Based on the procedure shown in FIG. 7, this application provides another communication method. As shown in FIG. 8, the method includes the following steps.

Step 801: A terminal sends a first request message to a DU, and the DU receives the first request message sent by the terminal.

The first request message is used to request to obtain at least one system information block. For example, the terminal may request at least one system information block in other system information (other SI), where the other system information is system information sent based on the request of the terminal. For example, the terminal requests to obtain one or more of a SIB3, a SIB4, a SIB5, a SIB6, a SIB7, a SIB8, a SIB9, a SIB10, a SIB11, or a SIB12. Optionally, when a system broadcast message broadcast by the DU includes a mapping relationship between system information (System Information, SI) and a system information block (System Information Block, SIB), for example, the SIB1 includes a mapping relationship between SI and a SIB, the first request message may also be used to request to obtain at least one system information from the other system information.

Step 802: The DU sends a second request message to a CU, and the CU receives the second request message sent by the DU.

Optionally, the DU sends the second request message to the CU in at least the following two implementations: In one implementation, after receiving the first request message, the DU obtains a specific type of a requested system information block from the first request message. For example, if the DU determines that the terminal needs to request the SIB3, the SIB4, and the SIB6, the DU generates a second request message based on content of the first request message, and sends, to the CU, the second request message used to request to obtain the SIB3, the SIB4, and the SIB6. The second request message carries type indication information of the SIB that needs to be requested. Specifically, the type indication information may indicate the type of the requested SIB, for example, the SIB3, the SIB4, and the SIB6; or the type indication information may be in a form of a bitmap, where a quantity of bits of the bitmap is a quantity of system information blocks that can be sent by an access network device. For example, if the quantity of system information blocks that can be sent by the access network device based on the request of the terminal is 10, the quantity of bits of the bitmap in the second request message is 10. For example, if the bits of the bitmap from left to right indicate the SIB3 to the SIB12 in sequence, and the bitmap carried in the second request message is 1101000000, it indicates that the SIB3, the SIB4, and the SIB6 are requested.

It may be understood that, if the DU previously stores system information blocks, the type indication information of the SIBs carried in the second request message may be further used to indicate information about the SIBs that the CU needs to send by broadcast, so that the CU correspondingly updates scheduling information of the SIBs.

In another implementation, after receiving the request message, the DU only knows that the request message is used to request a SIB, but cannot obtain specific content in the request message. For example, the request message is used to request to obtain the SIB3 and the SIB4, but the DU does not know that the terminal needs to obtain the SIB3 and the SIB4. In this implementation, the DU generates a second request message based on the first request message sent by the terminal, where the second request message is used to request to obtain a SIB.

A main difference between the two manners lies in that, in the first manner, the DU knows the specific type of the SIB that the terminal requests to obtain, and therefore, it may be considered that the terminal requests to obtain the SIB from the DU, but in the second manner, the DU does not know the specific type of the SIB that the terminal requests to obtain. Alternatively, the DU does not know that the request message sent by the terminal is used to request a SIB, and the DU only transparently transmits, to the CU, the request message sent by the terminal.

Step 803: The CU sends at least one system information requested in the second request message to the DU, and the DU receives the at least one system information from the CU.

Optionally, the CU sends types of system information blocks and content of the system information blocks to the DU, where the system information blocks may be separately encoded or jointly encoded. If the system information blocks are jointly encoded, the CU further needs to indicate types of the system information blocks that are jointly encoded. For example, the DU requests the SIB3, the SIB4, and the SIB6, the CU encodes the SIB3 and the SIB4 jointly, and the CU needs to notify the DU that the SIB3 and the SIB4 are jointly encoded. Specifically, which SIBs are jointly encoded may be notified to the DU in a form of a bitmap.

Optionally, the CU may further send scheduling information of the system information blocks, for example, information such as a period, a SI window, a quantity of times of sending, and a time of starting to broadcast a SIB.

Optionally, the CU may indicate, to the DU, which system information blocks or system information is sent by broadcast. The indicating manner may be directly indicating a type of a system information block or system information, or may be indicating by a bitmap, or may be directly using one bit to directly indicate whether each system information block or each system information is sent by broadcast. The indicating manner in the present invention is not limited to the foregoing three manners.

Optionally, the CU sends the at least one of system information as requested in the second request message to the DU, and sends at least one system information to the DU. The system information in the two steps may be sent separately in two CU-DU interface messages or may be sent together in one CU-DU interface message.

Step 804: The DU sends a response message to the terminal, and the terminal receives the response message sent by the DU.

It may be understood that a sequence of step 803 and step 804 is merely an example. In a feasible implementation, the DU may first perform step 804 and then perform step 803.

Step 805: The DU sends control information to the terminal, and the terminal receives the control information sent by the DU.

Step 806: The DU sends at least one system information block in a first time interval by using a time-frequency resource.

Step 807: The terminal obtains, in the first time interval, the at least one system information block from the time-frequency resource occupied by the at least one system information block.

A main difference between steps 804-807 shown in FIG. 8 and steps 502-505 shown in FIG. 5 lies in that the steps performed by the access network device in FIG. 5 are performed by the DU instead in FIG. 8. To be specific, the DU directly communicates with the terminal. For a specific implementation of steps 804-807, refer to the foregoing descriptions.

It may be understood that, the DU may perform all or some of the steps in the foregoing embodiment. The steps or operations are merely examples. In this application, other operations or variants of operations may be further performed. In addition, each step may be performed in different sequences presented in the foregoing embodiment, and in an implementation, not all operations in the foregoing embodiment may need to be performed.

In the embodiment shown in FIG. 8, based on a CU-DU architecture, interaction between the DU and the terminal, and interaction between the DU and the CU are implemented. The CU sends, to the DU based on the request of the DU, system information blocks that are separately encoded, or system information blocks that are jointly encoded, so that the DU sends the system information blocks to the terminal based on the request of the terminal. For detailed descriptions about steps 804-807 in the procedure shown in FIG. 8, refer to detailed descriptions about the interaction between the access network device and the terminal in the foregoing embodiment. Processes thereof are similar, and therefore details are not described again herein.

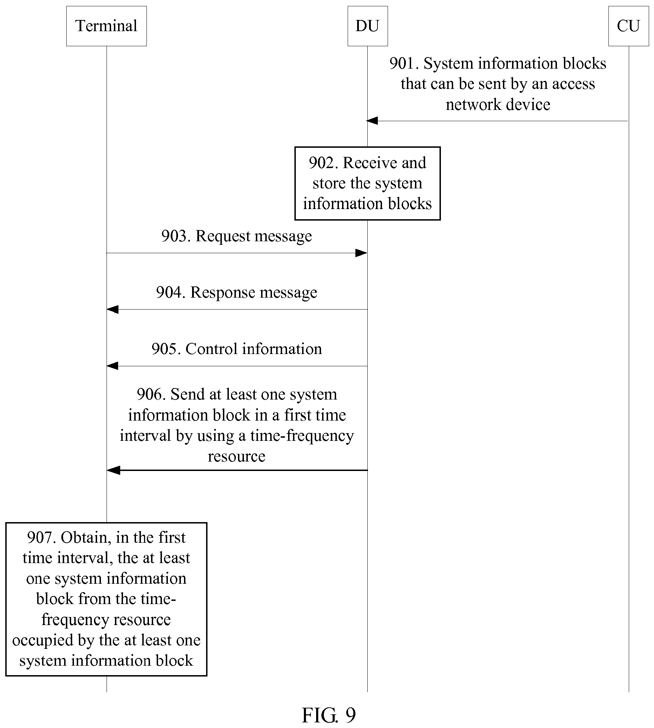

Based on the procedure shown in FIG. 7, the present invention provides another communication method. As shown in FIG. 9, the method includes the following steps.

Step 901: A CU sends, to a DU, system information blocks that can be sent by an access network device, and the DU receives the system information blocks sent by the CU.

The system information blocks that can be sent by the access network device are all system information blocks that can be sent based on a request of a terminal, for example, may be a SIB3 to a SIB12. The CU sends the system information blocks in a separate encoding mode. To be specific, each system information block is sent to the DU separately. In a feasible implementation, the CU separately precodes all the system information blocks that can be sent, and sends the system information blocks to the DU.

Step 902: The DU receives the system information blocks, and stores the received system information blocks.

Step 903: A terminal sends a request message to the DU, and the DU receives the request message sent by the terminal.

The request message is used to request to obtain at least one system information block.

Steps 904-907 are the same as steps 804-807 shown in FIG. 8. Refer to the foregoing descriptions. Details are not described again herein.

It may be understood that, the DU and the CU may perform all or some of the steps in the foregoing embodiment. The steps or operations are merely examples. In this application, other operations or variants of operations may be further performed. In addition, each step may be performed in different sequences presented in the foregoing embodiment, and in some implementations, not all operations in the foregoing embodiment may need to be performed.

In the embodiment shown in FIG. 9, the CU pre-sends, to the DU in the separate encoding mode, all the system information blocks that can be sent by the access network device, so that the DU stores the system information blocks locally. When the DU receives the request message from the terminal, the DU may send a corresponding system information block to the terminal based on the system information block requested in the request message. The system information block sent to the terminal may be one system information block requested by one terminal, or may be system information blocks requested by a plurality of terminals, where the system information blocks have a same scheduling period or different scheduling periods, and can be sent in one time interval.

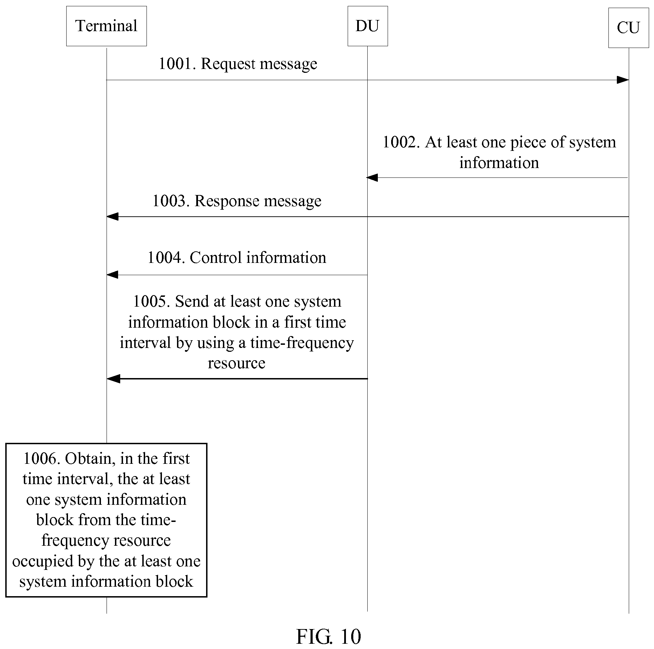

Based on the procedure shown in FIG. 7, the present invention provides another communication method. As shown in FIG. 10, the method includes the following steps.

Step 1001: A terminal sends a request message to a CU, and the CU receives the request message sent by the terminal.

The request message is used to request to obtain at least one system information block.

Step 1002: The CU sends at least one piece of system information to a DU, and the DU receives the at least one piece of system information from the CU.

In an implementation, the CU may send indication information to the DU, where the indication information may include types of system information blocks and content of the system information blocks, where the system information blocks may be separately encoded or jointly encoded. If the system information blocks are jointly encoded, the CU needs to indicate types of the system information blocks that are jointly encoded. For example, if scheduling periods of a SIB3 and a SIB4 are 160 ms, and a scheduling period of a SIB6 is 320 ms, the CU may jointly encode the SIB3 and the SIB4, and indicate the foregoing to the DU. Specifically, which SIBs are jointly encoded may be indicated to the DU in a form of a bitmap.

It may be understood that, the CU needs to send information about a SIB to the DU. Specific scheduling information includes a SIB period, a SI window, a quantity of times of sending, a time of starting to broadcast a SIB, and the like.

Optionally, the CU may indicate, to the DU, which system information blocks or system information is sent by broadcast. The indicating manner may be directly indicating a type of a system information block or system information, or may be indicating by a bitmap, or may be directly using one bit to directly indicate whether each system information block or each piece of system information is sent by broadcast. The indicating manner in the present invention is not limited to the foregoing three manners.

Further, the CU may indicate, to the DU, which system information blocks can be sent in a same system information window, for example, at a time that is an integer multiple of a least common multiple of scheduling periods of the SIB3, the SIB4, and the SIB6. For example, at a time of SF = 32 ^{∗} N (N is a positive integer such as 0, 1, ...), the SIB3, the SIB4, and the SIB6 can be sent in a first system information window after a start frame of SF = 32 ^{∗} N.

It may be understood that, step 1002 may be based on step 1001, or may be performed independently.

Step 1003: The CU sends a response message to the terminal, and the terminal receives the response message sent by the CU.

It may be understood that a sequence of step 1002 and step 1003 is merely an example. In a feasible implementation, the CU may first perform step 1003 and then perform step 1002.

For a specific implementation of step 1001 and step 1003, refer to the foregoing descriptions about step 501 and step 502. A difference lies in that the access network device in step 501 and step 502 corresponds to the CU in step 1001 and step 1003.

Step 1004: The DU sends control information to the terminal, and the terminal receives the control information sent by the DU.

Specifically, the DU may determine the control information based on the indication information sent by the CU.

Step 1005: The DU sends at least one system information block in a first time interval by using a time-frequency resource.

For a specific implementation of step 1004 and step 1005, refer to the foregoing descriptions about step 401 and step 402. A difference lies in that the access network device in step 401 and step 402 corresponds to the DU in step 1004 and step 1005.

Step 1006: The terminal obtains, in the first time interval, the at least one system information block from the time-frequency resource occupied by the at least one system information block.

It may be understood that, the DU and the CU may perform all or some of the steps in the foregoing embodiment. The steps or operations are merely examples. In this application, other operations or variants of operations may be further performed. In addition, each step may be performed in different sequences presented in the foregoing embodiment, and in some implementations, not all operations in the foregoing embodiment may need to be performed.

In several embodiments shown in FIG. 7 to FIG. 10, the at least one piece of system information sent by the DU to the terminal may have a same scheduling period, or a part of the system information may have a same scheduling period, and a part of the system information has different scheduling periods. When the system information has different scheduling periods, a transmission latency of the at least one piece of system information does not satisfy a latency condition. For a manner of sending control information by the DU to the terminal, refer to the foregoing three manners of sending control information by the access network device to the terminal. Details are not described again herein.

The solutions provided by this application are described above mainly from a perspective of interaction between the network elements. A person skilled in the art should easily be aware that, in combination with the units and algorithms steps in the examples described in the embodiments disclosed in this specification, the present invention can be implemented by hardware or a combination of hardware and computer software. Whether the functions are performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In this application, functional modules may be defined for the terminal, the access network device, the DU, or the CU based on the foregoing method example. For example, each functional module may be defined in a correspondence to each function. Alternatively, two or more functions may be integrated into one processing module. The integrated module may be implemented in a form of hardware, or may be implemented in a form of a software functional module. It should be noted that, division of modules in this application is merely an example, and is only division of logical functions. Other division manners may be available in actual implementations.

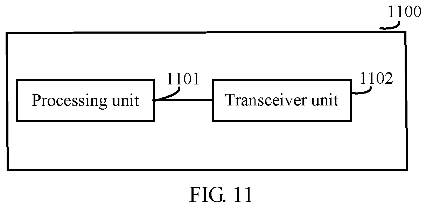

For example, if each functional module is defined in a correspondence to each function, FIG. 11 is a schematic diagram of an apparatus. The apparatus 1100 includes a processing unit 1101 and a transceiver unit 1102. The apparatus 1100 may be an access network device, may be a terminal, may be a DU, or may be a CU. The following describes functions of the apparatus 1100 separately.

When the apparatus 1100 is an access network device, the transceiver unit 1102 sends control information to a terminal, where the control information is used to indicate at least one system information block to be sent in a first time interval of a first system information window and a time-frequency resource occupied by the at least one system information block, and the at least one system information block is all or a part of system information blocks that can be sent in the first system information window; and the transceiver unit 1102 sends the at least one system information block in the first time interval by using the time-frequency resource.

In a possible design, the time-frequency resource occupied by the at least one system information block is a time-frequency resource shared by the at least one system information block. Optionally, the at least one system information block is jointly encoded. This can facilitate encoding.

In a possible design, the time-frequency resource occupied by the at least one system information block is a time-frequency resource respectively occupied by the at least one system information block. Optionally, the at least one system information block is separately encoded. Therefore, the terminal may decode only a system information block required by the terminal, and does not need to decode a system information block that is not required. Because a quantity of system information blocks that need to be decoded is reduced, the success rate of decoding can be further increased.

In a possible design, scheduling periods of the system information blocks that can be sent in the first system information window are the same.

In a possible design, scheduling periods of the system information blocks that can be sent in the first system information window are different. Therefore, system information blocks that originally belong to different system information windows can be sent in a same system information window, and a latency problem can be resolved.

In a possible design, the control information includes a system information block type of each of the at least one system information block.

In a possible design, the control information includes a first bitmap, where bits of the first bitmap correspond, on a one-to-one basis, to the system information blocks that can be sent in the first system information window, and a value of a bit corresponding to the at least one system information block is used to indicate that the at least one system information block is to be sent.

In a possible design, the control information includes a SI RNTI corresponding to each of the at least one system information block.

In a possible design, the transceiver unit 1102 receives a request message sent by the terminal, where the request message is used to request to obtain the at least one system information block. In a possible design, the request message includes a second bitmap, where a quantity of bits of the second bitmap is a quantity of system information blocks that can be sent by the access network device, and the second bitmap is used to request to obtain all or a part of the at least one system information block.

In a possible design, the transceiver unit 1102 sends a third bitmap to the terminal, where a quantity of bits of the third bitmap is the quantity of system information blocks that can be sent by the access network device, a value of a bit corresponding to the at least one system information block is used to indicate that the at least one system information block is to be sent, and the third bitmap is used to indicate that the access network device successfully receives the request message.

When the apparatus 1100 is a terminal, the transceiver unit 1102 receives control information from an access network device, where the control information is used to indicate at least one system information block to be sent in a first time interval of a first system information window and a time-frequency resource occupied by the at least one system information block.

The at least one system information block is all or a part of system information blocks that can be sent in the first system information window. The transceiver unit 1102 receives, based on the control information, the at least one system information block sent by the access network device in the first time interval by using the time-frequency resource.

In a possible design, the transceiver unit 1102 receives a third bitmap sent by the access network device, where a quantity of bits of the third bitmap is a quantity of system information blocks that can be sent by the access network device, a value of a bit corresponding to the at least one system information block is used to indicate that the at least one system information block is to be sent, and the third bitmap is used to indicate that the access network device successfully receives a request message.

When the apparatus 1100 is a DU, the transceiver unit 1102 sends control information to a terminal, where the control information is used to indicate at least one system information block to be sent in a first time interval of a first system information window and a time-frequency resource occupied by the at least one system information block, and the at least one system information block is all or a part of system information blocks that can be sent in the first system information window; and the transceiver unit 1102 sends the at least one system information block in the first time interval by using the time-frequency resource.

In a possible design, the transceiver unit 1102 receives a first request message sent by the terminal, where the first request message is used to request to obtain the at least one system information block.

In a possible design, the transceiver unit 1102 receives system information from a CU, where the system information includes at least the system information blocks that can be sent in the first system information window.

In a possible design, the transceiver unit 1102 sends a second request message to the CU, where the second request message is used to request to obtain at least one piece of system information, and the transceiver unit 1102 receives the at least one piece of system information sent by the CU.

In a possible design, the transceiver unit 1102 sends a third bitmap to the terminal, where a quantity of bits of the third bitmap is a quantity of system information blocks that can be sent by the access network device, a value of a bit corresponding to the at least one system information block is used to indicate that the at least one system information block is to be sent, and the third bitmap is used to indicate that the DU successfully receives the first request message.

When the apparatus 1100 is a CU, the transceiver unit 1102 receives a second request message from a DU, where the second request message is used to request to obtain at least one piece of system information; and the transceiver unit 1102 sends the at least one piece of system information requested to the DU.

In a possible design, the processing unit 1101 encodes each of the at least one piece of system information separately, and sends the at least one piece of system information that is encoded to the DU via the transceiver unit 1102.

In a possible design, the processing unit 1101 encodes the at least one piece of system information jointly, and sends the at least one piece of system information that is encoded to the DU via the transceiver unit 1102.

The transceiver unit 1102 receives a request message from a terminal, where the request message is used to request to obtain at least one piece of system information; and the CU sends the at least one piece of system information to the DU.

In this embodiment, the apparatus is presented in a form in which each functional module is defined in a correspondence to each function, or the apparatus is presented in a form in which each functional module is defined in an integrated manner. The "module" herein may be an application-specific integrated circuit (application-specific integrated circuit, ASIC), a circuit, a processor and a memory for executing one or more software or firmware programs, an integrated logic circuit, and/or another device that can provide the foregoing function. In a simple embodiment, a person skilled in the art may think that the apparatus 1100 may use the form shown in FIG. 2.

For example, the processing unit 1101 and the transceiver unit 1102 in FIG. 11 may be implemented by the processor 21 (and/or the processor 28) and the memory 23 in FIG. 2. Specifically, the processing unit 1101 and the transceiver unit 1102 may be implemented by the processor 21 (and/or the processor 28) by invoking application program code stored in the memory 23. This is not limited in this application.

This application further provides a computer storage medium, configured to store a computer software instruction used by the apparatus shown in FIG. 2 or FIG. 11. The computer software instruction includes program code designed for performing the foregoing method embodiment. A success rate of obtaining system information by a terminal can be increased by executing the stored program code.

This application further provides a computer program product. The computer program product includes a computer software instruction, and the computer software instruction may be loaded by a processor to implement the method in the foregoing method embodiment.

This application further provides a chip, including a processor and a transceiver component, where the chip may be configured to perform the method shown in FIG. 4, FIG. 5, or FIG. 7 to FIG. 10. Optionally, the chip further includes a storage unit.

This application further provides several other communication methods, where the communication methods may be used to resolve a technical problem in the background art. The communication methods are applicable to the system architecture shown in FIG. 6, where the system architecture includes a CU and one or more DUs that may communicate with the CU.

A person skilled in the art should know that, with development of technologies, literal expressions of the CU and the DU may change. In this application, names of network elements having functions of the CU and the DU are not limited. For ease of description, in the embodiments of this application, the CU and the DU are used as an example for description. The CU or the DU shown in FIG. 6 may have the structure shown in FIG. 2. For detailed descriptions, refer to the foregoing descriptions. Details are not described again herein.

In this application, system information is system information (system information, SI) or a system information block (system information block, SIB), and one piece of SI includes one or more SIBs having a same scheduling period.

When system information is broadcast based on the CU-DU architecture, the following issues need to be clarified. 1. Which of the DU and the CU modifies an indicator (indicator) in scheduling information, where the indicator is used to indicate which SIB or SI is being broadcast, and which SIB or SI is not being broadcast.

In an optional design, a SIB 1 carries the scheduling information. A terminal may know, based on the scheduling information after receiving the SIB1, which SIB or SI is being broadcast and a transmission window corresponding to the SIB or SI. 2. Which of the DU and the CU generates system information. 3. Which of the DU and the CU determines to broadcast system information. The communication methods provided by the embodiments of this application are hereinafter described by using a plurality of cases.

Solution 1: A DU modifies an indicator; a CU generates system information; and the DU determines to broadcast system information.

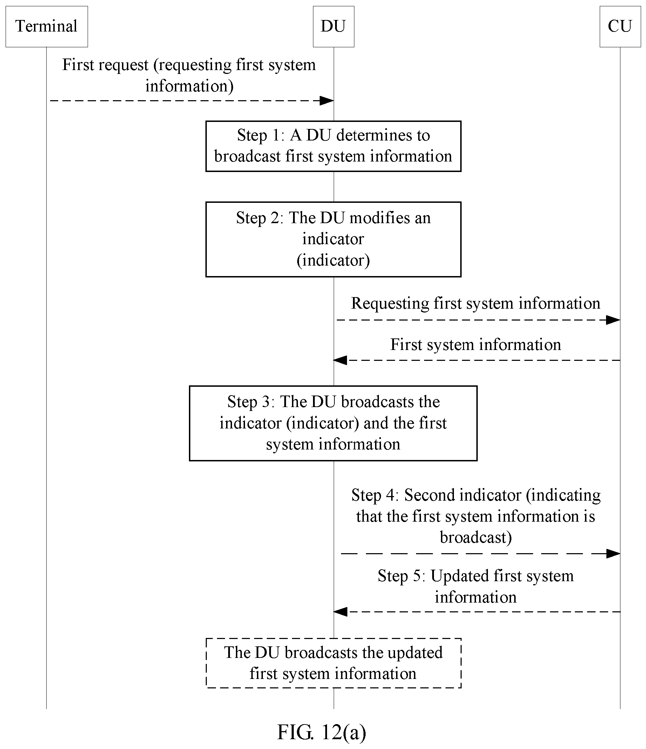

As shown in FIG. 12(a), a communication method provided by an embodiment of this application includes the following steps.

Step 1: A DU determines whether to broadcast first system information.

For example, when receiving a first request from a terminal, the DU determines to broadcast the first system information, where the first request is used to request the first system information. Optionally, the first request may be carried by an MSG 1 or an MSG 3, and the DU may obtain the first system information requested in the MSG 1 or the MSG 3. For another example, when a timer in the DU expires, the DU is triggered to determine to broadcast the first system information.

For another example, after the first system information is broadcast for a period of time, the DU may determine not to broadcast the first system information any longer.

Step 2: The DU modifies an indicator.

In this embodiment, the indicator may be referred to as a first indicator, and the first indicator is used to indicate whether the first system information is to be broadcast. The DU may modify the indicator based on a result of step 1. For example, the first system information is not broadcast previously, and the DU determines to broadcast the first system information in step 1. In this case, the DU modifies the indicator to indicate that the first system information is to be broadcast. For another example, the first system information is already broadcast, and the DU determines not to broadcast the first system information any longer in step 1. In this case, the DU modifies the indicator to indicate that the first system information is not to be broadcast.

Step 3: The DU broadcasts a modified indicator (which may also be referred to as a first indicator) and the first system information.

It may be understood that, that the DU broadcasts the first indicator and the first system information may be that the DU broadcasts the first indicator and the first system information separately. Specifically, after the DU broadcasts the first indicator, the terminal may receive the first indicator, and therefore can determine which system information is being broadcast and receive the first system information on a corresponding time-frequency resource.

Optionally, in the foregoing step 3, when the DU broadcasts the first system information, if the DU has obtained the first system information from a CU and stored the first system information in the DU locally, the DU may directly broadcast the first system information. If the DU does not locally store the first system information, the DU sends a second request to the CU, where the second request is used to request the first system information. The CU sends the first system information to the DU, and then the DU broadcasts the first system information.

Optionally, when broadcasting the first system information, the DU performs broadcasting based on scheduling information of the first system information, where the scheduling information of the first system information may have been obtained by the DU from the CU and stored in the DU locally, or may be sent together with the first system information to the DU when the CU sends the first system information to the DU.

Optionally, the DU may transfer some parameters in the first system information to the CU, so that the CU adds the parameters to the first system information when generating the first system information.

Optionally, step 4: The DU sends a second indicator to a CU.

The second indicator is used to indicate whether the first system information is broadcast. Optionally, the second indicator may be the foregoing indicator.

Optionally, after the foregoing step 4, the method further includes:
Step 5: If determining that the first system information is updated and determining that the DU is broadcasting the first system information, the CU sends the updated first system information to the DU.

To be specific, when updating the first system information, the CU may send the updated first system information to the DU, so that the DU can broadcast the updated first system information in a timely manner. This ensures that the first system information broadcast by the DU is latest, and ensures correctness of the broadcast system information.

For example, the DU is currently broadcasting a SIB6, and the DU sends the second indicator to the CU, indicating that the SIB6 is being sent; and when the CU determines that the SIB6 is currently updated, the CU may send the updated SIB6 to the DU, so that the DU broadcasts the updated SIB6 in a timely manner.

Solution 2: A DU modifies an indicator; a CU generates system information; and the CU determines to broadcast system information.

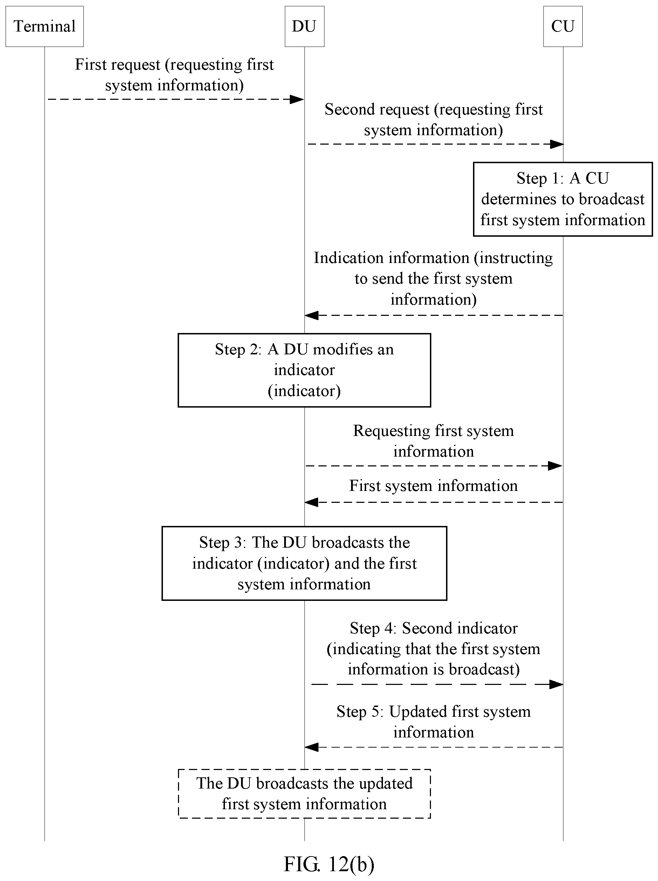

As shown in FIG. 12(b), a communication method provided by an embodiment of this application includes the following steps.

Step 1: A CU determines whether to broadcast first system information.

For example, when receiving a second request from a DU, the CU determines to broadcast the first system information, where the second request is used to request the first system information. Optionally, the DU sends the second request to the CU when receiving a first request from a terminal. In an optional design, the first request message is used to request to obtain at least one system information block. For example, the terminal may request at least one system information block in other system information (other SI), where the other system information is system information sent based on the request of the terminal. For example, the terminal requests to obtain one or more of a SIB3, a SIB4, a SIB5, a SIB6, a SIB7, a SIB8, a SIB9, a SIB10, a SIB11, or a SIB12. In another optional design, the first request message is used to request to obtain at least one piece of system information (SI). For example, the DU may broadcast a mapping relationship between system information (System Information, SI) and a system information block (System Information Block, SIB) (for example, the first SI includes a SIB3 and a SIB4, and the second SI includes a SIB5 to a SIB9). If the UE wants to obtain information in the SIB5, the UE may request to obtain the second SI based on the mapping relationship, that is, send the first request message, where the first request message is used to request to obtain the second SI. For another example, if the UE wants to obtain information in the SIB4 and the SIB5, the UE may request to obtain the first SI and the second SI based on the mapping relationship, that is, may send the first request message, where the first request message is used to request the first SI and the second SI. Optionally, one piece of SI may include one or more SIBs. Optionally, the DU may also send the mapping relationship to the CU, so that the CU can determine, based on the SI requested by the UE, which SIB is to be broadcast, and notify the DU which SIB needs to be broadcast. Optionally, the second request may be designed with reference to the first request. The DU may know the first system information requested in the first request. In this case, the first request may be carried by an MSG 1 or an MSG 3; or the DU may not know the first system information requested in the first request. For example, in this case, the first request is carried by the MSG 3, and the DU only transparently transmits the MSG 3 to the CU. Optionally, the first request is carried by the MSG 3; and the first request is an RRC message, and is used to request to obtain the first system information, for example, request to obtain a system information type 1, a system information type 2, and other first system information; or for another example, request to obtain a system information block type 2, a system information block type 3, and other first system information. The DU transparently transmits the first request to the CU. It may be understood that, when receiving the request from the terminal for requesting the first system information, the CU may determine to broadcast the first system information. For another example, when a timer in the CU expires, the CU is triggered to determine to broadcast the first system information.

For another example, after the first system information is broadcast for a period of time, the CU may also be triggered to determine not to broadcast the first system information any longer.

Step 2: A DU modifies an indicator.

For example, the CU sends indication information to the DU, instructing the DU to modify the indicator.

The CU sends indication information to the DU, instructing to send the first system information. Optionally, the CU may indicate, to the DU, which system information blocks or system information is sent by broadcast. The indicating manner may be directly indicating a type of a system information block or system information, or may be indicating by using a bitmap, or may be directly using one bit to directly indicate whether each system information block or each piece of system information is sent by broadcast. The indicating manner in the present invention is not limited to the foregoing three manners. In an example, the CU can determine, based on the SI requested by the UE, which SIB is to be broadcast, and notify the DU which SIB needs to be broadcast, or may directly notify the DU which SI needs to be broadcast.

In this embodiment, the indicator may be referred to as a first indicator, and the indicator may be used to indicate whether the first system information is to be broadcast. When the CU indicates, to the DU, which system information block or system information is to be sent by broadcast, there is a corresponding indicator for each system information block or each piece of system information. For example, an indicator for the system information block 3 indicates that the system information block is to be broadcast, and an indicator for the system information block 4 indicates that the system information block is not to be broadcast, and the UE needs to request to broadcast the system information block. The DU may modify the indicator based on a result of step 1. For example, the first system information is not broadcast previously, and the CU determines to broadcast the first system information in step 1. In this case, the DU modifies the indicator for indicating that the first system information is to be broadcast. For another example, the first system information is already broadcast, and the CU determines not to broadcast the first system information any longer in step 1. In this case, the DU modifies the indicator for indicating that the first system information is not to be broadcast.

Step 3: The DU broadcasts a modified indicator (which may also be referred to as a first indicator) and the first system information.

It may be understood that, that the DU broadcasts the first indicator and the first system information may be that the DU broadcasts the first indicator and the first system information separately. Specifically, after the DU broadcasts the first indicator, the terminal may receive the first indicator, and therefore can determine which system information is being broadcast and receive the first system information on a corresponding time-frequency resource.

Optionally, in the foregoing step 3, when the DU broadcasts the first system information, if the DU has obtained the first system information from the CU and stored the first system information in the DU locally, the DU may directly broadcast the first system information. Optionally, the CU sends types of system information blocks and content of the system information blocks to the DU, where the system information blocks may be separately encoded or jointly encoded. For example, the CU may send one or more SIBs to the DU, and the DU combines the SIBs into SI. If the DU does not locally store the first system information, the DU sends the second request to the CU, where the second request is used to request the first system information. The CU sends the first system information to the DU, and then the DU broadcasts the first system information.

Optionally, when broadcasting the first system information, the DU performs broadcasting based on scheduling information of the first system information, where the scheduling information of the first system information may have been obtained by the DU from the CU and stored in the DU locally, or may be sent together with the first system information to the DU when the CU sends the first system information to the DU. Optionally, the DU may transfer some parameters in the first system information to the CU, so that the CU adds the parameters to the first system information when generating the first system information.

Optionally, step 4: The DU sends a second indicator to the CU.

The second indicator is used to indicate whether the first system information is broadcast. Optionally, the second indicator may be the foregoing indicator.

Optionally, after the foregoing step 4, the method further includes:
Step 5: If determining that the first system information is updated and determining that the DU is broadcasting the first system information, the CU sends the updated first system information to the DU.

To be specific, when updating the first system information, the CU may send the updated first system information to the DU, so that the DU can broadcast the updated first system information in a timely manner. This ensures that the first system information broadcast by the DU is latest, and ensures correctness of the broadcast system information.

For example, the DU is currently broadcasting the SIB6, and the DU sends the second indicator to the CU, indicating that the SIB6 is being sent; and when the CU determines that the SIB6 is currently updated, the CU may send the updated SIB6 to the DU, so that the DU broadcasts the updated SIB6 in a timely manner.

It may be understood that, in this solution, that the CU generates system information may be that the CU generates SIBs, and the DU combines the SIBs into SI. To be specific, actual content of the system information is generated by the CU.

Solution 3: A DU modifies an indicator; the DU generates system information; and the DU determines to broadcast system information.

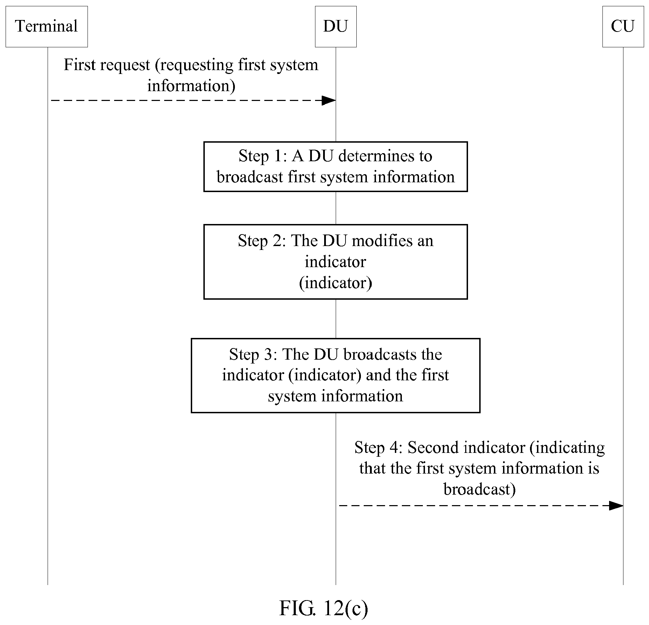

As shown in FIG. 12(c), a communication method provided by an embodiment of this application includes the following steps.

Step 1: A DU determines whether to broadcast first system information.

For example, when receiving a first request from a terminal, the DU determines to broadcast the first system information, where the first request is used to request the first system information. Optionally, the first request may be carried by an MSG 1 or an MSG 3, and the DU may obtain the first system information requested in the MSG 1 or the MSG 3. For another example, when a timer in the DU expires, the DU is triggered to determine to broadcast the first system information.

For another example, after the first system information is broadcast for a period of time, the DU may determine not to broadcast the first system information any longer.

Step 2: The DU modifies an indicator.

In this embodiment, the indicator may be referred to as a first indicator, and the first indicator is used to indicate whether the first system information is to be broadcast. The DU may modify the indicator based on a result of step 1. For example, the first system information is not broadcast previously, and the DU determines to broadcast the first system information in step 1. In this case, the DU modifies the indicator to indicate that the first system information is to be broadcast. For another example, the first system information is already broadcast, and the DU determines not to broadcast the first system information any longer in step 1. In this case, the DU modifies the indicator to indicate that the first system information is not to be broadcast.

Step 3: The DU broadcasts a modified indicator (which may also be referred to as a first indicator) and the first system information.

It may be understood that, that the DU broadcasts the first indicator and the first system information may be that the DU broadcasts the first indicator and the first system information separately. Specifically, after the DU broadcasts the first indicator, the terminal may receive the first indicator, and therefore can determine which system information is being broadcast and receive the first system information on a corresponding time-frequency resource.

In the foregoing step 3, when the DU broadcasts the first system information, the first system information is generated by the DU. Optionally, a CU may transfer some parameters in the first system information to the DU, so that the DU adds the parameters to the first system information when generating the first system information.

Optionally, step 4: The DU sends a second indicator to a CU.

The second indicator is used to indicate whether the first system information is broadcast. Optionally, the second indicator may be the foregoing indicator.

Solution 4: A DU modifies an indicator; the DU generates system information; and a CU determines to broadcast system information.

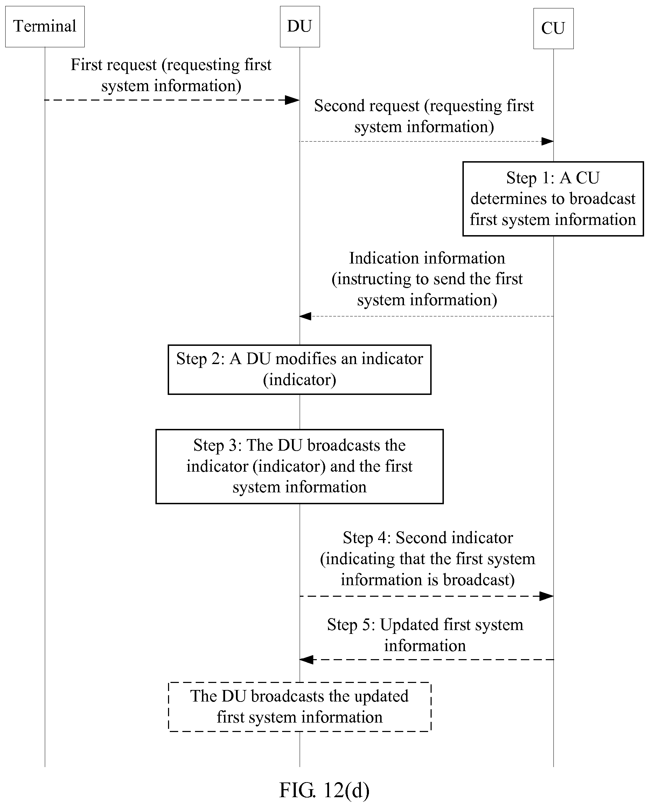

As shown in FIG. 12(d), a communication method provided by an embodiment of this application includes the following steps.

Step 1: A CU determines whether to broadcast first system information.

For example, when receiving a second request from a DU, the CU determines to broadcast the first system information, where the second request is used to request the first system information. Optionally, the DU sends the second request to the CU when receiving a first request from a terminal. The DU may know the first system information requested in the first request. In this case, the first request may be carried by an MSG 1 or an MSG 3; or the DU may not know the first system information requested in the first request. For example, in this case, the first request is carried by the MSG 3, and the DU only transparently transmits the MSG 3 to the CU. It may be understood that, when receiving the request from the terminal for requesting the first system information, the CU may determine to broadcast the first system information. For another example, when a timer in the CU expires, the CU is triggered to determine to broadcast the first system information.

For another example, after the first system information is broadcast for a period of time, the CU may also be triggered to determine not to broadcast the first system information any longer.

Step 2: A DU modifies an indicator.

For example, the CU sends indication information to the DU, instructing the DU to modify the indicator.

In this embodiment, the indicator may be referred to as a first indicator, and the indicator may be used to indicate whether the first system information is to be broadcast. The DU may modify the indicator based on a result of step 1. For example, the first system information is not broadcast previously, and the CU determines to broadcast the first system information in step 1. In this case, the DU modifies the indicator for indicating that the first system information is to be broadcast. For another example, the first system information is already broadcast, and the CU determines not to broadcast the first system information any longer in step 1. In this case, the DU modifies the indicator for indicating that the first system information is not to be broadcast.

Step 3: The DU broadcasts a modified indicator (which may also be referred to as a first indicator) and the first system information.

It may be understood that, that the DU broadcasts the first indicator and the first system information may be that the DU broadcasts the first indicator and the first system information separately. Specifically, after the DU broadcasts the first indicator, the terminal may receive the first indicator, and therefore can determine which system information is being broadcast and receive the first system information on a corresponding time-frequency resource.

It should be noted that, the first system information is generated by the DU, and scheduling information of the first system information is also generated by the DU. Optionally, the CU may transfer some parameters in the first system information to the DU, so that the DU adds the parameters to the first system information when generating the first system information.

Optionally, step 4: The DU sends a second indicator to the CU.

The second indicator is used to indicate whether the first system information is broadcast. Optionally, the second indicator may be the foregoing indicator.

In the solution 4, a network may process, in a timely manner, the request that is from the terminal for the first system information and is carried in the MSG 1 or MSG 3, and broadcast, in a timely manner, the first system information requested by the terminal. In addition, whether broadcasting of various types of system information can be synchronized between the CU and the DU facilitates system maintenance and updating.

Solution 5: A CU modifies an indicator; the CU generates system information; and a DU determines to broadcast system information.

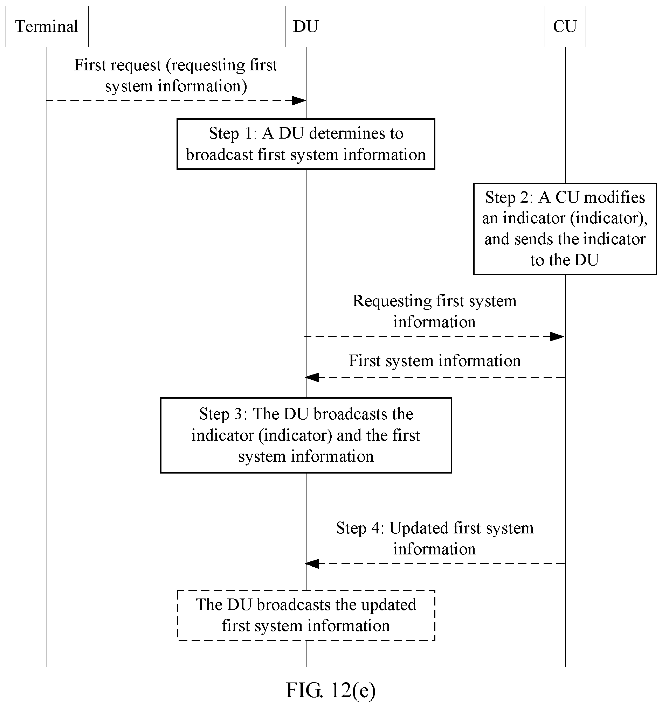

As shown in FIG. 12(e), a communication method provided by an embodiment of this application includes the following steps.

Step 1: A DU determines whether to broadcast first system information.

For example, when receiving a first request from a terminal, the DU determines to broadcast the first system information, where the first request is used to request the first system information. Optionally, the first request may be carried by an MSG 1 or an MSG 3, and the DU may obtain the first system information requested in the MSG 1 or the MSG 3. For another example, when a timer in the DU expires, the DU is triggered to determine to broadcast the first system information.

For another example, after the first system information is broadcast for a period of time, the DU may determine not to broadcast the first system information any longer.

After determining whether to broadcast the first system information, the DU may notify a determining result to a CU, so that the CU modifies an indicator. In an optional implementation, the DU may send a request message to the CU, requesting the CU to send the first system information to the DU. In this case, the request message may be considered as a notification instructing the CU to modify the indicator. Based on the notification, the CU may know that the first system information will be broadcast. Therefore, the indicator may be modified correctly.

In another optional implementation, the DU may send a notification message to the CU, notifying the CU of how to modify the indicator, for example, notifying the CU that the first system information will not be broadcast, or that the first system information will be broadcast. The CU can modify the indicator correctly based on the notification message.

Step 2: A CU modifies an indicator, and sends the indicator to the DU.

In this embodiment, the indicator may be referred to as a third indicator, and the indicator may be used to indicate whether the first system information is to be broadcast. The CU may modify the indicator based on a result of step 1. For example, the first system information is not broadcast previously, and the CU determines to broadcast the first system information in step 1. In this case, the CU modifies the indicator for indicating that the first system information is to be broadcast. For another example, the first system information is already broadcast, and the CU determines not to broadcast the first system information any longer in step 1. In this case, the CU modifies the indicator for indicating that the first system information is not to be broadcast.

Step 3: The DU broadcasts the modified indicator (which may also be referred to as a fourth indicator) and the first system information.

The fourth indicator indicating whether the first system information is broadcast.

It may be understood that, that the DU broadcasts the fourth indicator and the first system information may be that the DU broadcasts the fourth indicator and the first system information separately. Specifically, after the DU broadcasts the fourth indicator, the terminal may receive the fourth indicator, and therefore can determine which system information is being broadcast, and receive the first system information on a corresponding time-frequency resource.

Optionally, in the foregoing step 3, when the DU broadcasts the first system information, if the DU has obtained the first system information from the CU and stored the first system information in the DU locally, the DU may directly broadcast the first system information. If the DU does not locally store the first system information, the DU sends a second request to the CU, where the second request is used to request the first system information. The CU sends the first system information to the DU, and then the DU broadcasts the first system information. Optionally, when broadcasting the first system information, the DU performs broadcasting based on scheduling information of the first system information, where the scheduling information of the first system information may have been obtained by the DU from the CU and stored in the DU locally, or may be sent together with the first system information to the DU when the CU sends the first system information to the DU.

Optionally, the DU may transfer some parameters in the first system information to the CU, so that the CU adds the parameters to the first system information when generating the first system information.

Optionally, after the foregoing step 3, the method further includes:
Step 4: If determining that the first system information is updated and determining that the DU is broadcasting the first system information, the CU sends the updated first system information to the DU.

To be specific, when updating the first system information, the CU may send the updated first system information to the DU, so that the DU can broadcast the updated first system information in a timely manner. This ensures that the first system information broadcast by the DU is latest, and ensures correctness of the broadcast system information.

For example, the CU instructs, by the third indicator, the DU to broadcast a SIB6; and when the CU determines that the SIB6 is currently updated, the CU may send the updated SIB6 to the DU, so that the DU can broadcast the updated SIB6 in a timely manner.

Solution 6: A CU modifies an indicator; the CU generates system information; and the CU determines to broadcast system information.

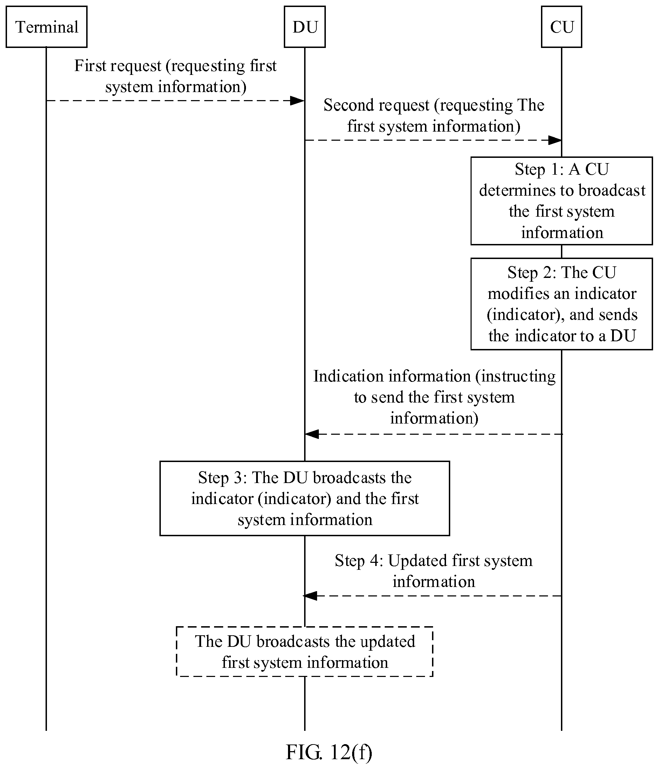

As shown in FIG. 12(f), a communication method provided by an embodiment of this application includes the following steps.

Step 1: A CU determines whether to broadcast a first system information.

For example, upon reception of a second request from a DU, the CU determines to broadcast the first system information, where the second request is used to request the first system information. Optionally, the DU sends the second request to the CU upon reception of a first request from a terminal. The DU may know the first system information requested in the first request. In this case, the first request may be carried by an MSG 1 or an MSG 3; or the DU may not know the first system information requested in the first request. For example, in this case, the first request is carried via the MSG 3, and the DU only transparently transmits the MSG 3 to the CU. It may be understood that, upon reception of a request from the terminal for requesting the first system information, the CU may determine to broadcast the first system information. For another example, when a timer in the CU expires, the CU is triggered to determine to broadcast the first system information.

For another example, after the first system information is broadcast for a period of time, the CU may also be triggered to determine not to broadcast the first system information any longer.

Step 2: The CU modifies an indicator, and sends the indicator to a DU.

In this embodiment, the indicator may be referred to as a third indicator, and the indicator may be used to indicate whether the first system information is to be broadcast. The CU may modify the indicator based on a result of step 1. For example, the first system information is not broadcast previously, and the CU determines to broadcast the first system information in step 1. In this case, the CU modifies the indicator to indicate that the first system information is to be broadcast. For another example, the first system information is already being broadcast, and the CU determines not to broadcast the first system information in step 1. In this case, the CU modifies the indicator to indicate that the first system information is not to be broadcast.

Step 3: The DU broadcasts the modified indicator (which may also be referred to as a fourth indicator) and the first system information.

The fourth indicator indicates whether the first system information is being broadcast.

It may be understood that, that the DU broadcasts the fourth indicator and the first system information may be that the DU broadcasts the fourth indicator and the first system information separately. Specifically, after the DU broadcasts the fourth indicator, the terminal may receive the fourth indicator, and therefore can determine which system information is being broadcast, and receive the first system information on a corresponding time-frequency resource.

Optionally, in the foregoing step 3, when the DU broadcasts the first system information, if the DU has obtained the first system information from the CU and stored the first system information in the DU locally, the DU may directly broadcast the first system information. If the DU does not locally store the first system information, the DU sends the second request to the CU, where the second request is used to request the first system information. The CU sends the first system information to the DU, and then the DU broadcasts the first system information. Optionally, when broadcasting the first system information, the DU performs broadcasting based on scheduling information of the first system information, where the scheduling information of the first system information may have been obtained by the DU from the CU and stored in the DU locally, or may be sent together with the first system information to the DU when the CU sends the first system information to the DU.

Optionally, the DU may transmit some parameters in the first system information to the CU, so that the CU adds the parameters to the first system information when generating the first system information.

Optionally, after the foregoing step 3, the method further includes:
Step 4: If determining that the first system information is updated and determining that the DU is broadcasting the first system information, the CU sends the updated first system information to the DU.

To be specific, when updating the first system information, the CU may send the updated first system information to the DU, so that the DU can broadcast the updated first system information in a timely manner. This ensures that the first system information broadcast by the DU is latest, and ensures correctness of the broadcast system information.

For example, the CU instructs, by a third indicator, the DU to broadcast a SIB6; and when the CU determines that the SIB6 is currently updated, the CU may send the updated SIB6 to the DU, so that the DU can broadcast the updated SIB6 in a timely manner.

Solution 7: A CU modifies an indicator; a DU generates system information; and the DU determines to broadcast system information.

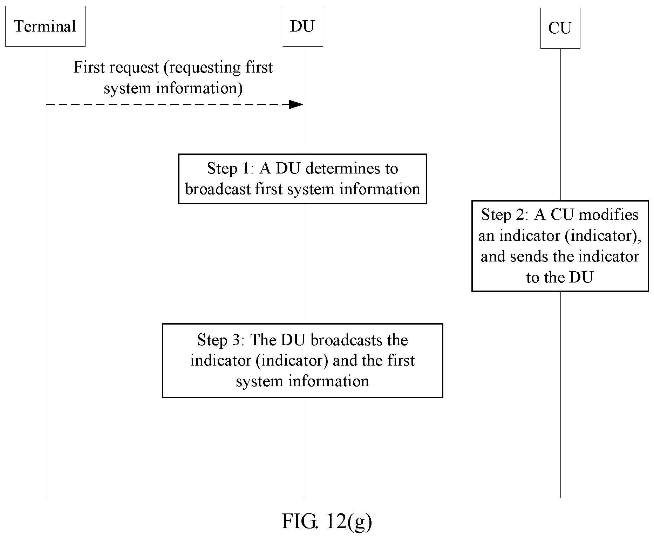

As shown in FIG. 12(g), a communication method provided by an embodiment of this application includes the following steps.

Step 1: A DU determines whether to broadcast first system information.

For example, when receiving a first request from a terminal, the DU determines to broadcast the first system information, where the first request is used to request the first system information. Optionally, the first request may be carried by an MSG 1 or an MSG 3, and the DU may obtain the first system information requested in the MSG 1 or the MSG 3. For another example, when a timer in the DU expires, the DU is triggered to determine to broadcast the first system information.

For another example, after the first system information is broadcast for a period of time, the DU may determine not to broadcast the first system information any longer.

After determining whether to broadcast the first system information, the DU may notify a determining result to a CU, so that the CU modifies an indicator. In an optional implementation, the DU may send a request message to the CU, requesting the CU to send the first system information to the DU. In this case, the request message may be considered as a notification instructing the CU to modify the indicator. Based on the notification, the CU may know that the first system information will be broadcast. Therefore, the indicator may be modified correctly. In another optional implementation, the DU may send a notification message to the CU, notifying the CU how to modify the indicator, for example, notifying the CU that the first system information will not be broadcast, or that the first system information will be broadcast. The CU can modify the indicator correctly based on the notification message.

Step 2: A CU modifies an indicator, and sends the indicator to the DU.

In this embodiment, the indicator may be referred to as a third indicator, and the indicator may be used to indicate whether the first system information is to be broadcast. The CU may modify the indicator based on a result of step 1. For example, the first system information is not broadcast previously, and the CU determines to broadcast the first system information in step 1. In this case, the CU modifies the indicator to indicate that the first system information is to be broadcast. For another example, the first system information is already broadcast, and the CU determines not to broadcast the first system information any longer in step 1. In this case, the CU modifies the indicator to indicate that the first system information is not to be broadcast.

Step 3: The DU broadcasts the modified indicator (which may also be referred to as a fourth indicator) and the first system information.

The fourth indicator indicates whether the first system information is being broadcast.

It may be understood that, that the DU broadcasts the fourth indicator and the first system information may be that the DU broadcasts the fourth indicator and the first system information separately. Specifically, after the DU broadcasts the fourth indicator, the terminal may receive the fourth indicator, and therefore can determine which system information is being broadcast, and receive the first system information on a corresponding time-frequency resource.

It should be noted that, the first system information is generated by the DU, and scheduling information of the first system information is also generated by the DU. Optionally, the CU may transfer some parameters in the first system information to the DU, so that the DU adds the parameters to the first system information when generating the first system information.

Solution 8: A CU modifies an indicator; a DU generates system information; and the CU determines to broadcast system information.

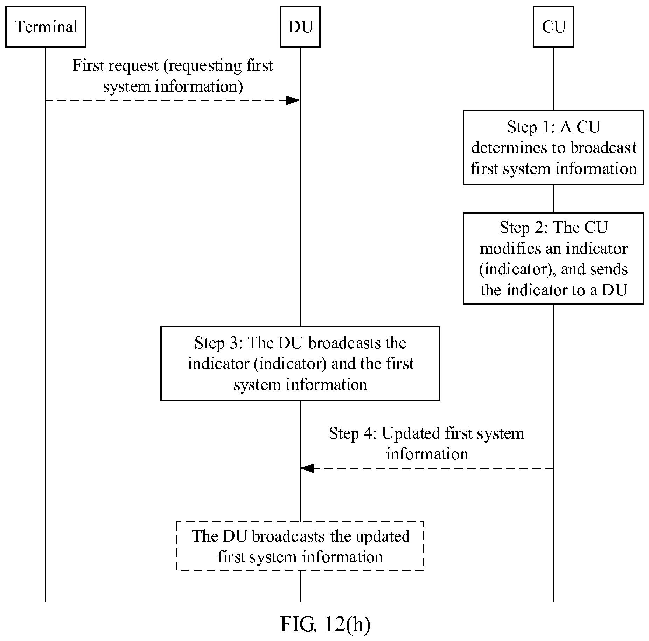

As shown in FIG. 12(h), a communication method provided by an application includes the following steps.

Step 1: A CU determines whether to broadcast first system information.

For example, when receiving a second request from a DU, the CU determines to broadcast the first system information, where the second request is used to request the first system information. Optionally, the DU sends the second request to the CU when receiving a first request from a terminal. The DU may know the first system information requested in the first request. In this case, the first request may be carried by an MSG 1 or an MSG 3; or the DU may not know the first system information requested in the first request. For example, in this case, the first request is carried by the MSG 3, and the DU only transparently transmits the MSG 3 to the CU. It may be understood that, when receiving the request from the terminal for requesting the first system information, the CU may determine to broadcast the first system information. For another example, when a timer in the CU expires, the CU is triggered to determine to broadcast the first system information.

For another example, after the first system information is broadcast for a period of time, the CU may also be triggered to determine not to broadcast the first system information any longer.

Step 2: The CU modifies an indicator, and sends the indicator to a DU.

In this embodiment, the indicator may be referred to as a third indicator, and the indicator may be used to indicate whether the first system information is to be broadcast. The CU may modify the indicator based on a result of step 1. For example, the first system information is not broadcast previously, and the CU determines to broadcast the first system information in step 1. In this case, the CU modifies the indicator for indicating that the first system information is to be broadcast. For another example, the first system information is already broadcast, and the CU determines not to broadcast the first system information any longer in step 1. In this case, the CU modifies the indicator for indicating that the first system information is not to be broadcast.

Step 3: The DU broadcasts the modified indicator (which may also be referred to as a fourth indicator) and the first system information.

The fourth indicator indicates whether the first system information is being broadcast.

It may be understood that, that the DU broadcasts the fourth indicator and the first system information may be that the DU broadcasts the fourth indicator and the first system information separately. Specifically, after the DU broadcasts the fourth indicator, the terminal may receive the fourth indicator, and therefore can determine which system information is being broadcast, and receive the first system information on a corresponding time-frequency resource.

It should be noted that, the first system information is generated by the DU, and scheduling information of the first system information is also generated by the DU. Optionally, the CU may transfer some parameters in the first system information to the DU, so that the DU adds the parameters to the first system information when generating the first system information. Optionally, in each of the foregoing solutions, the DU may further receive a first window indicator from the CU, where the first window indicator is used to indicate whether the first system information can be sent in a system information window other than a system information window corresponding to the first system information.

Optionally, the DU may broadcast a second window indicator, where the second window indicator is used to indicate whether the first system information can be sent in a system information window other than a system information window corresponding to the first system information. Optionally, the first window indicator may be the same as the second window indicator.

It may be understood that, the DU or the CU may perform all or some of the steps in the foregoing embodiment. The steps or operations are merely examples. In this application, other operations or variants of operations may be further performed. In addition, each step may be performed in different sequences presented in the foregoing embodiment, and not all operations in the foregoing embodiment may need to be performed.

In the solution 1 to the solution 8, the CU sends the scheduling information of the first system information to the DU. Optionally, the scheduling information of the first system information includes at least one of the following: a period of the first system information, a system information window (SI window) of the first system information, a start time of sending the first system information, and a quantity of times of sending the first system information. The start time of sending the first system information may be a start time or valid time or a modification period (Modification Period) of sending or changing a SIB or SI. Therefore, the DU may broadcast the first system information based on the scheduling information of the first system information.

Optionally, the scheduling information may further carry sending indication information, indicating whether the first system information needs to be broadcast, where the first system information may be a SIB or SI. Optionally, the scheduling information may further indicate whether the SIB or the SI is sent in a SI window of a SIB or SI of another scheduling period at a time of time domain overlapping, or indicate whether SIBs or SI in different scheduling periods needs to be sent in a same SI window at a time of time domain overlapping.

Optionally, the scheduling information may further indicate whether an original SI window of a SIB or SI sent in a SI window of a SIB or SI of another scheduling period at the time of domain overlapping is reserved. Alternatively, after a SIB or SI is sent in a SI window of a SIB or SI of another scheduling period, whether the SI window corresponding to the SIB or SI needs to be reserved may be predefined by a protocol. In this application, the time of time domain overlapping is a time that is an integer multiple of a least common multiple of different scheduling periods. For a specific implementation of sending SIBs or SI having different scheduling periods at the time of time domain overlapping of the SIBs or SI in a same SI window, refer to descriptions about FIG. 3a to FIG. 3d. Details are not described again herein.

Optionally, the CU may further indicate a physical channel type for sending the SIB or the SI by the DU. Specifically, the physical channel type may include at least one of a physical broadcast channel (Physical Broadcast Channel, PBCH), a physical downlink shared channel (Physical Downlink Shared Channel, PDSCH), a special physical downlink shared channel, an enhanced physical downlink shared channel (Enhanced Physical Downlink shared Channel, EPDSCH), or another physical channel newly introduced in new radio (new radio, NR).

The special physical downlink shared channel may be physical downlink shared channel applicable to a special terminal, for example, an NPDSCH (Narrowband Physical Downlink Shared channel) applicable to a Narrowband Internet of Things (Narrowband Internet of Things, NB-IoT) terminal, or an MPDSCH (MTC Physical Downlink Shared Channel) applicable to an MTC (Machine Type Communication) terminal or an enhanced MTC terminal.

For example, it may be further indicated that a physical channel for sending a master information block (master information block, MIB) is physical broadcast information. It may be indicated that a physical channel for a SIB or SI other than the MIB is at least one of a physical downlink shared channel, a special physical downlink shared channel, enhanced physical downlink shared channel (Enhanced Physical Downlink shared Channel, EPDSCH), or another physical channel newly introduced in new radio (new radio, NR).

In a possible implementation, when the terminal sends a SI request by an MSG 3, a new RRC signaling format or a new contention resolution (contention resolution, CR) format needs to be introduced. The new RRC message for requesting SI needs to carry first indication information used to indicate information about the requested SI or SIB.

The first indication information may be in a form of a bitmap or in an enumeration form, or other forms. Optionally, the new RRC message for requesting SI may not carry identifier information of the terminal, for example, a TMSI, an IMSI, an S-TMSI, a temporary random identifier, or other kind of terminal identifier information determined based on a TMSI, an IMSI, and an S-TMSI.

As a response of a network side, a CR message may include a new RRC message for requesting SI, or include identifier information of the terminal and second indication information, or include only second indication information. Optionally, when the CR message includes the second indication information, the second indication information may be the same as the first indication information in the new RRC message for requesting SI, or may indicate the first indication information, or the second indication information is only used to acknowledge, to the terminal, that the network receives the SI request of the terminal.

In a possible solution, an existing CR format may be used. Specifically, when a length of information included in the CR message does not match the existing CR message, redundant bits may be set to all 0s or all Is. Specifically, most significant bits or least significant bits or bits in other parts may be selected as redundant bits. Alternatively, a new CR format is introduced. For example, length indication information is introduced to indicate length information of a current CR.

It may be understood that, when the terminal sends a SI request, a case in which the SI request is sent successfully or SI fails to be received may exist. For example, the SI request fails to be sent, or no acknowledgement message is received after the SI request is sent successfully, or all acknowledgement messages received from the network are that SI cannot be received successfully. An action of failing to receive SI by the terminal may be defined by the network. For example, the network broadcasts a timer; and if the terminal fails to receive the SI, the terminal needs to wait for expiry of the timer before the terminal can send a SI request. A duration of the timer may be further predefined by the protocol.

Alternatively, the network may send indication information, instructing the terminal to immediately perform cell reselection when the SI request fails to be sent or the SI fails to be received. Further, the terminal may consider that a current cell is barred, or consider that a current cell is barred in a period of time, and a duration thereof is configured by the network or predefined by the protocol.

In this application, functional modules may be defined for the DU or the CU based on the foregoing method example. For example, each functional module may be defined in a correspondence to each function. Alternatively, two or more functions may be integrated into one processing module. The integrated module may be implemented in a form of hardware, or may be implemented in a form of a software functional module. It should be noted that, division of modules in this application is merely an example, and is only division of logical functions. Other division manners may be available in actual implementations.

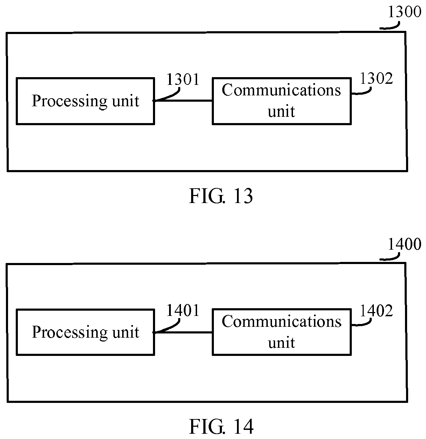

For example, if each functional module is defined in a correspondence to each function, FIG. 13 is a schematic structural diagram of a DU. The DU 1300 includes a processing unit 1301 and a communications unit 1302. The following describes functions of the DU 1300 separately.

The processing unit 1301 is configured to control the communications unit 1302 to:
receive a first indicator from a central unit CU, where the first indicator is used to indicate that first system information is to be broadcast; and
broadcast a second indicator and the first system information, where the second
indicator is used to indicate that the first system information is being broadcast.

In a possible design, the processing unit 1301 is further configured to control the communications unit 1302 to:
receive the first system information from the CU; or
receive scheduling information of the first system information from the CU; or
receive the first system information and scheduling information of the first system information from the CU, where
the scheduling information is used to indicate an occasion for sending the first system information.

In a possible design, the processing unit 1301 is further configured to control the communications unit 1302 to:
receive a third indicator from the CU, where the third indicator is used to indicate whether the first system information can be sent in a system information window other than a system information window corresponding to the first system information.

In a possible design, the processing unit 1301 is further configured to:
control the communications unit 1302 to broadcast the third indicator.

In a possible design, the processing unit 1301 is specifically configured to control the communications unit 1302 to:
broadcast a SIB1, where the SIB1 includes the second indicator.

In a possible design, the scheduling information includes at least one of the following:
a period of the first system information, the system information window of the first system information, a start time of sending the first system information, and a quantity of times of sending the first system information.

In this embodiment, the DU is presented in a form in which each functional module is defined in a correspondence to each function, or the DU is presented in a form in which each functional module is defined in an integrated manner. The "module" herein may be an application-specific integrated circuit (application-specific integrated circuit, ASIC), a circuit, a processor and a memory for executing one or more software or firmware programs, an integrated logic circuit, and/or another device that can provide the foregoing function.

For example, if each functional module is defined in a correspondence to each function, FIG. 14 is a schematic structural diagram of a CU. The CU 1400 includes a processing unit 1401 and a communications unit 1402. The following describes functions of the CU 1400 separately.

The processing unit 1401 is configured to control the communications unit 1402 to:
send a first indicator to a distributed unit DU, where the first indicator is used to indicate that first system information is to be broadcast; and
if determining that the first system information is updated and determining that the DU is broadcasting the first system information, send the updated first system information to the DU.

In a possible design, the processing unit 1401 is further configured to control the communications unit 1402 to:
send the first system information to the DU; or
send scheduling information of the first system information to the DU; or
send the first system information and scheduling information of the first system information to the DU.

In a possible design, the processing unit 1401 is further configured to control the communications unit 1402 to:
send a third indicator to the DU, where the third indicator is used to indicate whether the first system information can be sent in a system information window other than a system information window corresponding to the first system information.

In a possible design, the processing unit 1401 is further configured to control the communications unit 1402 to:
receive a request message from the DU, where the request message is used to request the first system information.

In a possible design, the scheduling information includes at least one of the following:
a period of the first system information, the system information window of the first system information, a start time of sending the first system information, and a quantity of times of sending the first system information.

In this embodiment, the CU is presented in a form in which each functional module is defined in a correspondence to each function, or the CU is presented in a form in which each functional module is defined in an integrated manner. The "module" herein may be an application-specific integrated circuit (application-specific integrated circuit, ASIC), a circuit, a processor and a memory for executing one or more software or firmware programs, an integrated logic circuit, and/or another device that can provide the foregoing function.

This application further provides a computer-readable storage medium, where the computer-readable storage medium stores an instruction, and when the instruction runs on a computer, the computer is enabled to perform the method performed by the foregoing DU. The computer may be, for example, a DU.

This application further provides a computer-readable storage medium, where the computer-readable storage medium stores an instruction, and when the instruction runs on a computer, the computer is enabled to perform the method performed by the foregoing CU. The computer may be, for example, a CU.

This application provides a computer program product. The computer program product includes a computer software instruction, and the computer software instruction may be loaded by a processor to implement the procedure of the communication method performed by the foregoing DU in any one of the embodiments.

This application provides a computer program product. The computer program product includes a computer software instruction, and the computer software instruction may be loaded by a processor to implement the procedure of the communication method performed by the foregoing CU in any one of the embodiments.

This application further provides a chip, where the chip may be a chip in a DU, the chip includes a processing unit and a transceiver unit, and optionally, the chip further includes a storage unit, where the chip may be configured to perform any one of the foregoing communication methods performed by the DU.

This application further provides a chip, where the chip may be a chip in a CU, the chip includes a processing unit and a transceiver unit, and optionally, the chip further includes a storage unit, where the chip may be configured to perform any one of the foregoing communication methods performed by the CU.

Although the present invention is described with reference to the embodiments, in a process of implementing the present invention that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are described in dependent claims that are different from each other, but this does not mean that these measures cannot be combined to produce a better effect.

A person skilled in the art should understand that the embodiments of this application may be provided as a method, an apparatus (device), or a computer program product. Therefore, this application may use a form of hardware-only embodiments, software-only embodiments, or embodiments with a combination of software and hardware. They are collectively referred to as "modules" or "systems". Moreover, this application may use a form of a computer program product that is implemented on one or more computer-usable storage media (including but not limited to a disk memory, a CD-ROM, an optical memory, and the like) that include computer usable program code. The computer program is stored/distributed in an appropriate medium and is provided as or used as a part of the hardware together with other hardware, or may also use another distribution form, such as via the Internet or another wired or wireless telecommunications system.

This application is described with reference to the flowcharts and/or block diagrams of the method, the apparatus (device), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or any other programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A communication method, comprising:
receiving, by a distributed unit, DU, of a radio access network, a first request from a terminal, the first request is used to request first system information;
transparently transmitting, by the DU, the first request to a central unit, CU, of the radio access network, such that the CU determines whether to broadcast the first system information;
when the CU determines to broadcast the first system information, receiving, by the DU, a first indicator from the CU, wherein the first indicator is used to indicate that the first system information is to be broadcast;
modifying, by the DU, based on the first indicator, a second indicator, wherein the second indicator indicates that the first system information is being broadcast; and
broadcasting, by the DU, the modified second indicator and the first system information, wherein, the DU directly broadcasts the first system information, if the DU has obtained the first system information from the CU and stored the first system information in the DU locally, and, if the DU does not locally store the first system information, the DU sends a second request to the CU, wherein the second request is used to request the first system information, the CU sends the first system information to the DU, and then the DU broadcasts the first system information.

2. The method according to claim 1, further comprising, before the DU receives the first request from the terminal:
receiving and storing (902), by the DU, system information blocks, SIBs, that can be sent by an access network device, wherein the first system information comprises one or more of the SIBs received by the DU from the CU.

3. The method according to claims 1 or 2, wherein the first system information comprises one or more system information blocks, SIBs, and wherein the one or more SIBs comprise any one or more of the following: a SIB3, a SIB4, a SIB5, a SIB6, a SIB7, a SIB8, a SIB9, a SIB10, a SIB11, or a SIB12.

4. The method according to any one of claims 1 to 3, wherein the broadcasting, by the DU, a second indicator comprises:
broadcasting, by the DU, a SIB1, wherein the SIB1 comprises the second indicator.

5. The method according to claim 4, wherein the SIB1 further comprises scheduling information, wherein the scheduling information comprises any one or more of the following:
a period of the first system information, a system information window of the first system information, a start time of sending the first system information, or a quantity of times of sending the first system information.

6. The method according to any one of claim 1 to 5, wherein:
the DU has functions of a radio link layer control layer and a medium access control layer, and the CU has functions of radio resource control layer and a packet data convergence protocol layer; or,
the DU has functions of a radio link layer control layer and a medium access control protocol layer, and the CU has functions of radio resource control layer and a packet data convergence protocol layer, and wherein the DU and the CU are belong to one radio access network.

7. A communication method, comprising:
receiving, by a central unit, CU, of a radio access network, a first request from a terminal via a distributed unit, DU, of the radio access network, wherein the first request is used to request first system information and wherein the first system information comprises one or more system information blocks, SIBs;
when receiving the first request, the CU determining whether to broadcast the first system information; and
if the CU determines to broadcast the first system information, sending, by the CU, a first indicator to the DU, wherein the first indicator is used to indicate that the first system information is to be broadcast;
wherein the method further comprises, before the CU receives the first request: sending, by the CU to the DU, SIBs that can be sent by an access network device, such that the DU may receive and store the SIBs; or
wherein, if the DU does not locally store the first system information, the method further comprises:
receiving, by the CU, a second request from the DU, where the second request is used to request the first system information and, then, sending, by the CU, the first system information to the DU.

8. The method according to claim 7 wherein the one or more SIBs comprise any one or more of the following: a SIB3, a SIB4, a SIB5, a SIB6, a SIB7, a SIB8, a SIB9, a SIB10, a SIB11, or a SIB12.

9. The method according to any one of claim 7 to 8, wherein:
the DU has functions of a radio link layer control layer and a medium access control layer, and the CU has functions of radio resource control layer and a packet data convergence protocol layer; or,
the DU has functions of a radio link layer control layer and a medium access control protocol layer, and the CU has functions of radio resource control layer and a packet data convergence protocol layer, and wherein the DU and the CU are belong to one radio access network.

10. . An apparatus, applied to a distributed unit, DU, of a radio access network, wherein the apparatus is configured to perform the method according to any one of claims 1 to 6.

11. . An apparatus, applied to a central unit, CU, of a radio access network, wherein the apparatus is configured to perform the method according to any one of claims 7 to 9.

12. . A radio access network, comprising: the apparatus according to the claim 11 and the apparatus according to the claim 10.

13. . A computer-readable storage medium comprising instructions which, when executed by a computer, cause the computer to carry out the method according to any one of claims 1 to 9.

14. . A computer program product comprising instructions which, when executed by a computer, cause the computer to carry out the method according to any one of claims 1 to 9.

## Patentansprüche

1. Kommunikationsverfahren, umfassend:
Empfangen, durch eine "Distributed Unit", DU, eines Funkzugangsnetzes, einer ersten Anforderung von einem Endgerät, wobei die erste Anforderung dazu verwendet wird, erste Systeminformationen anzufordern;
transparentes Übertragen, durch die DU, der ersten Anforderung an eine "Central Unit", CU, des Funkzugangsnetzes, derart, dass die CU bestimmt, ob die ersten Systeminformationen rundgesendet werden;
wenn die CU bestimmt, die ersten Systeminformationen rundzusenden, Empfangen, durch die DU, eines ersten Indikators von der CU, wobei der erste Indikator verwendet wird, um anzuzeigen, dass die ersten Systeminformationen rundgesendet werden sollen;
Modifizieren, durch die DU, auf der Grundlage des ersten Indikators, eines zweiten Indikators, wobei der zweite Indikator anzeigt, dass die ersten Systeminformationen rundgesendet werden; und
Rundsenden, durch die DU, des modifizierten zweiten Indikators und der ersten Systeminformationen, wobei die DU die ersten Systeminformationen direkt sendet, wenn die DU die ersten Systeminformationen von der CU erhalten und die ersten Systeminformationen in der DU lokal gespeichert hat, und, wenn die DU die ersten Systeminformationen nicht lokal speichert, die DU eine zweite Anforderung an die CU sendet, wobei die zweite Anforderung dazu verwendet wird, die ersten Systeminformationen anzufordern, die CU die ersten Systeminformationen an die DU sendet und dann die DU die ersten Systeminformationen rundsendet.

2. Verfahren nach Anspruch 1, ferner umfassend, bevor die DU die erste Anforderung vom Endgerät empfängt:
Empfangen und Speichern (902) von Systeminformationsblöcken, SIBs, die von einer Zugangsnetzvorrichtung gesendet werden können, durch die DU, wobei die ersten Systeminformationen einen oder mehrere der SIBs umfassen, die durch die DU von der CU empfangen werden.

3. Verfahren nach Anspruch 1 oder 2, wobei die ersten Systeminformationen einen oder mehrere Systeminformationsblöcke, SIBs, umfassen und wobei der eine oder die mehreren SIBs einen oder mehrere der folgenden SIBs umfassen: einen SIB3, einen SIB4, einen SIB5, einen SIB6, einen SIB7, einen SIB8, einen SIB9, einen SIB10, einen SIB11 oder einen SIB12.

4. Verfahren nach einem der Ansprüche 1 bis 3, wobei das Rundsenden, durch die DU, eines zweiten Indikators umfasst:
Rundsenden, durch die DU, eines SIB1, wobei der SIB1 den zweiten Indikator umfasst.

5. Verfahren nach Anspruch 4, wobei der SIB1 ferner Planungsinformationen umfasst, wobei die Planungsinformationen eines oder mehrere der folgenden Elemente umfassen:
einen Zeitraum der ersten Systeminformationen, ein Systeminformationsfenster der ersten Systeminformationen, eine Startzeit für das Senden der ersten Systeminformationen oder eine Anzahl von Malen für das Senden der ersten Systeminformationen.

6. Verfahren nach einem der Ansprüche 1 bis 5, wobei:
die DU Funktionen einer "Radio Link Layer Control"-Schicht und einer "Medium Access Control"-Schicht aufweist und die CU Funktionen einer "Radio Resource Control"-Schicht und einer "Packet Data Convergence Protocol"-Schicht aufweist; oder
die DU Funktionen einer "Radio Link Layer Control"-Schicht und einer "Medium Access Control Protocol"-Schicht aufweist und die CU Funktionen einer "Radio Resource Control"-Schicht und einer "Packet Data Convergence Protocol"-Schicht aufweist, und wobei die DU und die CU zu einem Funkzugangsnetz gehören.

7. Kommunikationsverfahren, umfassend:
Empfangen, durch eine "Central Unit", CU, eines Funkzugangsnetzes, einer ersten Anforderung von einem Endgerät über eine "Distributed Unit", DU, des Funkzugangsnetzes, wobei die erste Anforderung dazu verwendet wird, erste Systeminformationen anzufordern und wobei die ersten Systeminformationen einen oder mehrere Systeminformationsblöcke, SIBs, umfassen;
beim Empfangen der ersten Anforderung, Bestimmen, durch die CU, ob die ersten Systeminformationen rundgesendet werden; und
wenn die CU bestimmt, dass die ersten Systeminformationen rundgesendet werden, Senden, durch die CU, eines ersten Indikators an die DU, wobei der erste Indikator verwendet wird, um anzuzeigen, dass die ersten Systeminformationen rundgesendet werden sollen;
wobei das Verfahren ferner, bevor die CU die erste Anforderung empfängt, folgenden Vorgang umfasst: Senden, durch die CU an die DU, von SIBs, die von einer Zugangsnetzvorrichtung gesendet werden können, derart, dass die DU die SIBs empfangen und speichern kann; oder
wobei, wenn die DU die ersten Systeminformationen nicht lokal speichert, das Verfahren ferner umfasst: Empfangen, durch die CU, einer zweiten Anforderung von der DU, wobei die zweite Anforderung dazu verwendet wird, die ersten Systeminformationen anzufordern, und dann Senden, durch die CU, der ersten Systeminformationen an die DU.

8. Verfahren nach Anspruch 7, wobei der eine oder die mehreren SIBs einen oder mehrere der folgenden SIBs umfassen: einen SIB3, einen SIB4, einen SIB5, einen SIB6, einen SIB7, einen SIB8, einen SIB9, einen SIB10,einen SIB11 oder einen SIB12.

9. Verfahren nach einem der Ansprüche 7 bis 8, wobei:
die DU Funktionen einer "Radio Link Layer Control"-Schicht und einer "Medium Access Control"-Schicht aufweist und die CU Funktionen einer "Radio Resource Control"-Schicht und einer "Packet Data Convergence Protocol"-Schicht aufweist; oder
die DU Funktionen einer "Radio Link Layer Control"-Schicht und einer "Medium Access Control Protocol"-Schicht aufweist und die CU Funktionen einer "Radio Resource Control"-Schicht und einer "Packet Data Convergence Protocol"-Schicht aufweist, und wobei die DU und die CU zu einem Funkzugangsnetz gehören.

10. Vorrichtung, angewandt auf eine "Distributed Unit", DU, eines Funkzugangsnetzes, wobei die Vorrichtung dafür ausgelegt ist, das Verfahren nach einem der Ansprüche 1 bis 6 durchzuführen.

11. Vorrichtung, angewandt auf eine "Central Unit", CU, eines Funkzugangsnetzes, wobei die Vorrichtung dafür ausgelegt ist, das Verfahren nach einem der Ansprüche 7 bis 9 durchzuführen.

12. Funkzugangsnetz, umfassend: die Vorrichtung nach Anspruch 11 und die Vorrichtung nach Anspruch 10.

13. Computerlesbares Speichermedium, umfassend Anweisungen, die bei ihrer Ausführung durch einen Computer den Computer veranlassen, das Verfahren nach einem der Ansprüche 1 bis 9 durchzuführen.

14. Computerprogrammprodukt, umfassend Anweisungen, die bei ihrer Ausführung durch einen Computer den Computer veranlassen, das Verfahren nach einem der Ansprüche 1 bis 9 durchzuführen.

## Revendications

1. Procédé de communication, comprenant les étapes consistant à :
recevoir, par une unité distribuée (DU) d'un réseau d'accès radio, une première demande en provenance d'un terminal, la première demande étant utilisée pour demander une première information de système ;
transmettre de manière transparente, par la DU, la première demande à une unité centrale (CU) du réseau d'accès radio, de sorte que la CU détermine s'il faut diffuser la première information de système ;
quand la CU détermine qu'il faut diffuser la première information de système, recevoir, par la DU, un premier indicateur en provenance de la CU, le premier indicateur étant utilisé pour indiquer que la première information de système doit être diffusée ;
modifier, par la DU, sur la base du premier indicateur, un second indicateur, le second indicateur indiquant que la première information de système est en cours de diffusion ; et diffuser, par la DU, le second indicateur modifié et la première information de système, la DU diffusant directement la première information de système si la DU a obtenu la première information de système de la CU et a stocké localement la première information de système dans la DU, et, si la DU ne stocke pas localement la première information de système, la DU envoyant une seconde demande à la CU, la seconde demande étant utilisée pour demander la première information de système, la CU envoyant la première information de système à la DU, puis la DU diffusant la première information de système.

2. Procédé selon la revendication 1, comprenant en outre, avant la réception, par la DU, de la première demande, en provenance du terminal, les étapes consistant à :
recevoir et stocker (902), par la DU, des blocs d'informations de système (SIB) qui peuvent être envoyés par un dispositif de réseau d'accès, la première information de système comprenant un ou plusieurs des SIB reçus par la DU en provenance de la CU.

3. Procédé selon la revendication 1 ou 2, dans lequel la première information de système comprend un ou plusieurs blocs d'informations de système (SIB) et dans lequel le ou les SIB comprennent un ou plusieurs SIB quelconques des SIB suivants : un SIB3, un SIB4, un SIB5, un SIB6, un SIB7, un SIB8, un SIB9, un SIB10, un SIB11 ou un SIB12.

4. Procédé selon l'une quelconque des revendications 1 à 3, dans lequel la diffusion, par la DU, d'un second indicateur comprend l'étape consistant à :
diffuser, par la DU, un SIB1, le SIB1 comprenant le second indicateur.

5. Procédé selon la revendication 4, dans lequel le SIB1 comprend en outre une information de planification, l'information de planification comprenant une ou plusieurs informations quelconques des informations suivantes :
une période de la première information de système, une fenêtre d'information de système de la première information de système, une heure de début d'envoi de la première information de système ou un nombre d'envois de la première information de système.

6. Procédé selon l'une quelconque des revendications 1 et 5, dans lequel :
la DU a des fonctions d'une couche de contrôle de couche de liaison radio et d'une couche de contrôle d'accès au support et la CU a des fonctions d'une couche de contrôle des ressources radio et d'une couche de protocole de convergence de données de paquet ; ou
la DU a des fonctions d'une couche de contrôle de couche de liaison radio et d'une couche de protocole de contrôle d'accès au support et la CU a des fonctions d'une couche de contrôle des ressources radio et d'une couche de protocole de convergence de données de paquet, et la DU et la CU appartenant à un réseau d'accès radio.

7. Procédé de communication, comprenant les étapes consistant à :
recevoir, par une unité centrale (CU) d'un réseau d'accès radio, une première demande en provenance d'un terminal par l'intermédiaire d'une unité distribuée (DU) du réseau d'accès radio, la première demande étant utilisée pour demander une première information de système et la première information de système comprenant un ou plusieurs blocs d'informations de système (SIB) ;
lors de la réception de la première demande, la CU déterminant s'il faut diffuser la première information de système ; et
si la CU détermine qu'il faut diffuser la première information de système, envoyer, par la CU, un premier indicateur à la DU, le premier indicateur étant utilisé pour indiquer que la première information de système doit être diffusée ;
le procédé comprenant en outre, avant la réception, par la CU, de la première demande, l'étape consistant à : envoyer, par la CU à la DU, des SIB qui peuvent être envoyés par un dispositif de réseau d'accès de sorte que la DU puisse recevoir et stocker les SIB ; ou
si la DU ne stocke pas localement la première information de système, le procédé comprenant en outre l'étape consistant à :
recevoir, par la CU, une seconde demande en provenance de la DU, la seconde demande étant utilisée pour demander la première information de système, puis envoyer, par la CU, la première information de système à la DU.

8. Procédé selon la revendication 7, dans lequel le ou les SIB comprennent un ou plusieurs SIB quelconques des SIB suivants : un SIB3, un SIB4, un SIB5, un SIB6, un SIB7, un SIB8, un SIB9, un SIB10,un SIB11 ou un SIB12.

9. Procédé selon l'une quelconque des revendications 7 et 8, dans lequel :
la DU a des fonctions d'une couche de contrôle de couche de liaison radio et d'une couche de contrôle d'accès au support et la CU a des fonctions d'une couche de contrôle des ressources radio et d'une couche de protocole de convergence de données de paquet ; ou
la DU a des fonctions d'une couche de contrôle de couche de liaison radio et d'une couche de protocole de contrôle d'accès au support et la CU a des fonctions d'une couche de contrôle des ressources radio et d'une couche de protocole de convergence de données de paquet, et la DU et la CU appartenant à un réseau d'accès radio.

10. Appareil, appliqué à une unité distribuée (DU) d'un réseau d'accès radio, l'appareil étant configuré pour réaliser le procédé selon l'une quelconque des revendications 1 à 6.

11. Appareil, appliqué à une unité centrale (CU) d'un réseau d'accès radio, l'appareil étant configuré pour réaliser le procédé selon l'une quelconque des revendications 7 à 9.

12. Réseau d'accès radio, comprenant : l'appareil selon la revendication 11 et l'appareil selon la revendication 10.

13. Support de stockage lisible par ordinateur, comprenant des instructions qui, lorsqu'elles sont exécutées par un ordinateur, amènent l'ordinateur à réaliser le procédé selon l'une quelconque des revendications 1 à 9.

14. Produit de programme informatique comprenant des instructions qui, lorsqu'elles sont exécutées par un ordinateur, amènent l'ordinateur à réaliser le procédé selon l'une quelconque des revendications 1 à 9.
